# EUROPEAN PATENT APPLICATION

(11) **EP 4 790 796 A1**
(43) Date of publication of application: **12.08.2026**
(21) Application number: 24874623.2
(22) Date of filing: 02.10.2024
(51) Int. Cl.: H01M 10/6556, H01M 10/613, H01M 10/625, H01M 10/647, H01M 10/6568

(54) **BATTERY DEVICE, COOLING SYSTEM THEREFOR, COOLING PLATE, COOLING ASSEMBLY, AND COOLING METHOD**

(30) Priority: 05.10.2023 JP 2023173723; 21.02.2024 JP 2024024760
(71) Applicant: SANGO CO., LTD., Nagoya-shi Aichi 456-0023 (JP)
(72) Inventor: OHNO, Akihiro, Nagoya-shi, Aichi 456-0023 (JP); MATSUURA, Kazunari, Nagoya-shi, Aichi 456-0023 (JP); FUKUOKA, Kunihiro, Nagoya-shi, Aichi 456-0023 (JP)
(74) Representative: Meissner Bolte Partnerschaft mbB
(86) International application number: PCT/JP2024/035199
(87) International publication number: WO 2025/075022

(57) **Abstract**

A cooling system for a battery device in accordance with the present disclosure includes: a substrate section (2) of a case containing a cell body; a cooling plate attached to the substrate section (2); a first coolant passage; and a second coolant passage (A2) separated from the first coolant passage (A1), the substrate section (2) having a back surface constituting a peripheral wall of the first coolant passage (A1) and a peripheral wall of the second coolant passage (A2), the cooling plate including a first plate forming another peripheral wall of the first coolant passage (A1) and a second plate for another peripheral wall of the second coolant passage (A2), the first plate and the second plate being attached to the back surface of the substrate section (2) in an area where the cell body is disposed.

## Description

### Technical Field

The present disclosure relates to a battery device, a cooling plate used therefor, a cooling system used therefor, a cooling assembly used therefor, and a cooling method therefor.

### Background Art

Technical development for cooling battery devices has been demanded. Power storage devices, which are one example of the battery device, are mounted in, for example, electric vehicles or hybrid vehicles as power sources, and are capable of outputting a large current. The case of such a power storage device generally has a rectangular box shape, and stacked cells are housed and fixed directly or in module units on its flat plate-shaped substrate section. Here, the stacked cell is obtained by stacking a plurality of power storage cells along a stacking direction. Since the stacked cells generate heat inside the case, a cooler for forcibly cooling the stacked cells is attached to the case. As a typical cooler, for example, in the one disclosed in Patent Literature 1, a volume housing independent of the case is attached to a lower portion of the case, and cooling water, which is a cooling medium, is circulated through this housing.

However, additionally providing an independent cooler to a case is undesirable in terms of cost and weight. Further, the configuration in which the case and the cooler are separate members hinders heat transfer therebetween (thermal resistance is high).

Therefore, Patent Literature 2 proposes using the back surface of the substrate section (bottom wall) of the case as a peripheral wall of a coolant passage of a cooler. Since the cooling water in the coolant passage is in direct contact with the back surface of the substrate section of the case, the thermal resistance between the cooling water and the stacked cells, which are a source of heat generation, is reduced.

Patent Literature 3 is one prior art document that discloses a technology related to the invention of the present application. In this Patent Literature 3, a plurality of cooling devices that are separate from the case are disposed separately on the substrate section of the case. The cooling devices are disposed in series with respect to the flow of cooling water.

### Citation List

### [Patent Literature]

[Patent Literature 1]
   Japanese Patent Application Publication Tokukai No. 2023-12176
[Patent Literature 2]
   Publication of Japanese Patent No. 7167103
[Patent Literature 3]
   Japanese Patent Application Publication Tokukai No. 2020-510534

### Summary of Invention

### Technical Problem

In order to achieve the high output and long life required for power sources of recent electric vehicles, stricter temperature management is required for cell bodies of battery devices, such as stacked cells. As in the power storage device disclosed in Patent Literature 2, the cooling efficiency can be improved by using the back surface of the substrate section of the case as a part of the peripheral wall constituting the coolant passage. In other words, heat from the stacked cells inside the case can be efficiently transferred to the cooling water flowing through the coolant passages.

Here, the stacked cells are not disposed so as to cover the entire front surface (surface opposite to the back surface) of the substrate section of the case, and there are gaps between the stacked cells. Heat from the stacked cells is also conducted to the substrate section opposite from these gaps (open substrate section), and thus if such an open substrate section constitutes a peripheral wall of a coolant passage, heat from this section will also be transferred to the cooling water. As a result, the cooling capacity of the cooling water is hindered, which affects the cooling capacity for the substrate section where the stacked cells are installed (actual cooling target substrate section), which is the original cooling target by the cooling water.

In light of the above, it is an object of the present application to provide a technology that can contribute to improvement in cooling effects of a battery device by a coolant.

### Solution to Problem

The present disclosure has been made in order to solve the foregoing problem, and a cooling system in accordance with a first aspect of the present disclosure is a cooling system for a battery device configured to include: a substrate section of a case containing a cell body of the battery device; a cooling plate attached to the substrate section; a first coolant passage; and a second coolant passage separated from the first coolant passage, the substrate section having a back surface constituting a peripheral wall of the first coolant passage and a peripheral wall of the second coolant passage, the cooling plate including a first plate forming another peripheral wall of the first coolant passage and a second plate forming another peripheral wall of the second coolant passage, the first plate and the second plate being attached to the back surface of the substrate section in an area where the cell body is disposed.

A battery device in accordance with Aspect 21 of the present disclosure is configured to include: a case containing a cell body; and a cooling section disposed on a back surface of a substrate section of the case, the cooling section including a first coolant passage and a second coolant passage separated from the first coolant passage, the back surface of the substrate section constituting a peripheral wall of the first coolant passage and a peripheral wall of the second coolant passage, another peripheral wall of the first coolant passage being formed by a first plate, another peripheral wall of the second coolant passage being formed by a second plate, the first plate and the second plate being attached to the back surface of the substrate section in an area where the cell body is disposed.

A battery device cooling method in accordance with Aspect 22 of the present disclosure is a method for cooling a battery device including: a substrate section of a case containing a cell body; a cooling plate attached to the substrate section; a first coolant passage; and a second coolant passage separated from the first coolant passage, the substrate section having a back surface constituting a peripheral wall of the first coolant passage and a peripheral wall of the second coolant passage, the cooling plate including a first plate forming another peripheral wall of the first coolant passage and a second plate forming another peripheral wall of the second coolant passage, the first plate and the second plate being attached to the back surface of the substrate section in an area where the cell body is disposed, the method including independently supplying a coolant in parallel to the first coolant passage and the second coolant passage.

A cooling plate in accordance with Aspect 23 of the present disclosure is a cooling plate that is attached to a substrate section of a case containing a cell body of a battery device and that constitutes a cooling system for the battery device together with the substrate section, the substrate section having a back surface constituting a peripheral wall of a first coolant passage and a peripheral wall of a second coolant passage separated from the first coolant passage, the cooling plate being configured to include: a first plate including a first coolant passage forming recess part forming another peripheral wall of the first coolant passage; a second plate including a second coolant passage forming recess part forming another peripheral wall of the second coolant passage; and a coolant supply section forming recess part configured to independently supply a coolant in parallel to the first coolant passage and the second coolant passage.

### Brief Description of Drawings

Fig. 1 is a perspective view schematically illustrating a state in which stacked cells are disposed on the upper surface of a substrate section of a power storage device in accordance with Embodiment 1 of the present disclosure.
Fig. 2 is a bottom view illustrating the power storage device in accordance with Embodiment 1 of the present disclosure.
Fig. 3 is a schematic cross-sectional view taken along III-III line in Fig. 2.
Fig. 4 is a schematic cross-sectional view taken along IV-IV line in Fig. 2.
Fig. 5 is a schematic cross-sectional view taken along V-V line in Fig. 2.
Fig. 6 is a schematic cross-sectional view taken along VI-VI line in Fig. 2.
Fig. 7 is a schematic cross-sectional view taken along VII-VII line in Fig. 2.
Fig. 8 is a schematic cross-sectional view taken along VIII-VIII line in Fig. 2.
Fig. 9 is a bottom view illustrating a power storage device in accordance with Embodiment 2 of the present disclosure.
Fig. 10 is a schematic cross-sectional view taken along X-X line in Fig. 9.
Fig. 11 is a perspective view illustrating a power storage device in accordance with Embodiment 3 of the present disclosure.
Fig. 12 is a bottom view illustrating a power storage device in accordance with Embodiment 4 of the present disclosure.
Fig. 13 is a schematic cross-sectional view taken along XIII-XIII line in Fig. 12.
Fig. 14 is a schematic cross-sectional view taken along XIV-XIV line in Fig. 12.
Fig. 15 is a schematic cross-sectional view taken along XV-XV line in Fig. 12.
Fig. 16 is a schematic cross-sectional view taken along XVI-XVI line in Fig. 12.
Fig. 17 is a bottom view illustrating a power storage device in accordance with Embodiment 5 of the present disclosure.
Fig. 18 is an enlarged view of a part of Fig. 17.
Fig. 19 is a schematic cross-sectional view taken along XIX-XIX line in Fig. 18.
Fig. 20 is a schematic cross-sectional view taken along XX-XX line in Fig. 18.
Fig. 21 is a schematic cross-sectional view taken along XXI-XXI line in Fig. 17.
Fig. 22 is a bottom view illustrating a power storage device in accordance with Embodiment 6 of the present disclosure.
Fig. 23 is a bottom view illustrating a power storage device in accordance with Embodiment 7 of the present disclosure.
Fig. 24 is a bottom view illustrating a power storage device in accordance with Embodiment 8 of the present disclosure.
Fig. 25 is an enlarged view of a part of Fig. 24.
Fig. 26 is a schematic cross-sectional view taken along XXVI-XXVI line in Fig. 25.
Fig. 27 is a schematic cross-sectional view taken along XXVII-XXVII line in Fig. 25.
Fig. 28 is a bottom view illustrating a power storage device in accordance with Embodiment 9 of the present disclosure.
Fig. 29 is a bottom view illustrating a power storage device in accordance with Embodiment 10 of the present disclosure.
Fig. 30 is an enlarged view of a part of Fig. 29.
Fig. 31 is a schematic cross-sectional view taken along XXXI-XXXI line in Fig. 29.
Fig. 32 is a schematic cross-sectional view taken along XXXII-XXXII line in Fig. 29.
Fig. 33 is a schematic cross-sectional view taken along XXXIII-XXXIII line in Fig. 29.
Fig. 34 is a schematic cross-sectional view taken along XXXIV-XXXIV line in Fig. 30.
Fig. 35 is a schematic cross-sectional view taken along XXXV-XXXV line in Fig. 30.
Fig. 36 is a schematic cross-sectional view taken along XXXVI-XXXVI line in Fig. 30.

### Description of Embodiments

The following description will discuss embodiments of the present disclosure with reference to the drawings.

### (Embodiment 1)

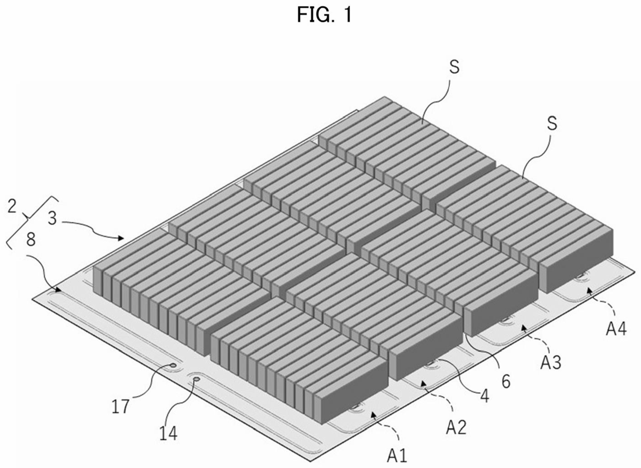

Fig. 1 is a perspective view illustrating a state in which stacked cells S are disposed on the upper surface of a substrate section 2 of a power storage device (one example of a battery device of the present disclosure) in accordance with Embodiment 1. Each stacked cell S is obtained by stacking single cells. The stacked cell S is one example of a "cell body" of the present disclosure, and a plurality of stacked cells S are disposed on the upper surface of the substrate section 2 so as to be adjacent with a predetermined interval. The substrate section 2 is made of a metal plate, such as SUS, and includes a specific area 3 provided with the stacked cells S on the upper surface thereof and a general area 8 provided with no stacked cells S. A control device or the like can be disposed in this general area 8. A side wall (not illustrated) stands from the periphery of this substrate section 2 so as to surround the stacked cells S, thereby forming a case section.

The specific area 3 is provided with an actual cooling target substrate section 4 and an open substrate section 6. The actual cooling target substrate section 4 is a portion of the substrate section 2 that is in direct contact with the stacked cell S in the specific area 3. The open substrate section 6 is a portion of the substrate section 2 that corresponds to a gap formed between adjacent stacked cells S in the specific area 3.

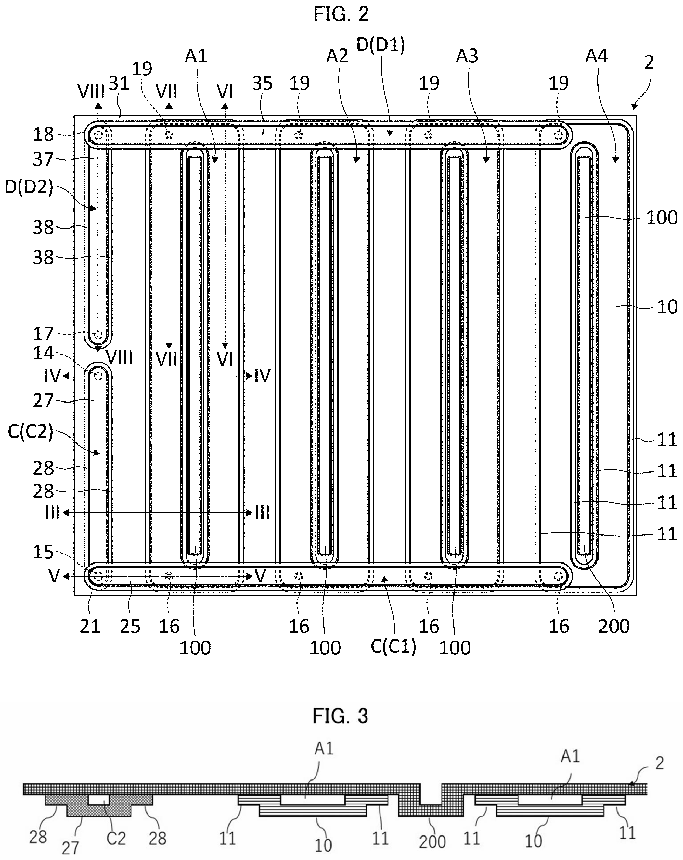

As illustrated in Fig. 2, on the back surface (bottom surface) of the substrate section 2, first to fourth coolant passages A1 to A4 are provided as a cooling section. Hereinafter, the "coolant passage A" is intended to indicate at least one of the first coolant passage A1 to the fourth coolant passage A4.

The first to fourth coolant passages A1 to A4 are each formed by a recess part (coolant passage forming recess part) 10 of a metal plate 11, such as SUS, which has a high thermal conductivity and the back surface of the substrate section 2. As illustrated in Fig. 2, the metal plate 11 is a strip provided with an opening 100 at its center, and the recess part 10 is formed by press-bending of the center part of the strip along its periphery. The opening 100 is a part where the plate is not present within the metal plate 11. An unprocessed part (flange part) of the metal plate at the periphery of the recess part 10 is welded to the substrate section 2 in a liquid-tight manner. The groove of the recess part 10 constitutes at least a part of the peripheral wall of the coolant passage A (see Fig. 3).

In Fig. 2, cooling water, as a coolant, which has been introduced from an introduction opening 16 passes through the first coolant passage A1 and is discharged from a discharge opening 19. In this example, the first to fourth coolant passages are denoted by reference signs A1 to A4, respectively. As illustrated in Fig. 1, each stacked cell S is provided with single cells stacked in a coolant flow direction of the first to fourth coolant passages A1 to A4.

The stacked cells S are disposed in parallel in a direction orthogonal to a direction in which the single cells are stacked. The stacked cells S opposite from the first to fourth coolant passages A1 to A4 correspond to first to fourth cell bodies, respectively. The metal plates 11 constituting the peripheral walls of the coolant passages have the same shape, including the structure of each recess part 10 and the portions corresponding to each introduction opening 16 and discharge opening 19 for the coolant. By standardizing the components as described above, a reduction in product cost can be achieved.

The number of the metal plates 11 forming the coolant passages can be adjusted as appropriate in accordance with the area of the substrate section 2. Further, adjusting the shape and area of the metal plate 11 allows for adaptation to changes in the area and shape of the substrate section 2. The material and thickness of the metal plate 11 can be adjusted as appropriate. Also, the opening 100 of the metal plate 11 can be omitted.

The metal plates 11 on which the first to fourth coolant passages A1 to A4 are formed are attached to the back surface of the substrate section 2 in an area where the stacked cells S are disposed. The "area where the stacked cells S are disposed" is an area in the substrate section 2 corresponding to the actual cooling target substrate section 4 with which the stacked cells S are in direct contact, and is an area corresponding to a position that is opposite from the stacked cells S with the substrate section 2 interposed therebetween. It is preferable to dispose the metal plate 11 so as to cover the area where the stacked cells S are disposed, that is, the actual cooling target substrate section 4 with which the stacked cells S are in contact.

In other words, the open substrate section 6 is provided with no metal plates 11 forming the first to fourth coolant passages A1 to A4. However, this does not exclude disposing the metal plates 11 forming the first to fourth coolant passages A1 to A4 on the open substrate section 6, and the metal plates 11 may be disposed on the open substrate section 6 in accordance with, for example, the size and shape of the substrate section 2 and the number and size of the stacked cells S disposed on the substrate section 2.

The metal plates 11 are disposed so as to be spaced from each other. As a result, the peripheral wall (excluding the substrate section 2) of the first coolant passage A1, which is constituted by the groove of the recess part 10, and the peripheral wall (excluding the substrate section 2) of the second coolant passage A2, which is constituted by the groove of the recess part 10, are in a state of being spaced from each other.

The metal plate 11 constituting the peripheral wall of the first coolant passage A1 corresponds to a first plate. The metal plate 11 constituting the peripheral wall of the second coolant passage A2 corresponds to a second plate. The first plate and the second plate may be made of a continuous member or may be made of separate members. In any case, it is preferable that the members constituting the cooling plate are formed of a material (for example, stainless steel) having excellent thermal conductivity and coolant corrosion resistance.

The metal plates constituting the peripheral wall of the third coolant passage A3 and the peripheral wall of the fourth coolant passage A4 constitute a third plate and a fourth plate, respectively. Since the plates have the same shape, the number thereof can be appropriately increased or decreased as appropriate in accordance with, for example, the area of the substrate section 2.

The plurality of metal plates 11 constituting the peripheral walls of the first to fourth coolant passages A1 to A4 constitute a cooling plate. A cooling system for a power storage device, which is an example of a battery device, includes the substrate section 2 of a case that contains the stacked cells S as cell bodies of the power storage device, and a cooling plate attached to the substrate section 2.

In this example, the metal plates 11 constituting the coolant passages A1 to A4 are disposed so as to be spaced from each other. That is, since the metal plates 11 constituting the coolant passages A1 to A4 are independent of each other, heat transfer between the metal plates 11 is prevented.

Note that the metal plates 11 may be a single continuous member. In this case, it is preferable to reduce the contact area between the metal plates to reduce mutual thermal interference. Alternatively, heat insulating materials may be disposed between the metal plates 11. For example, an adhesive foamed resin can be employed as a heat insulating material.

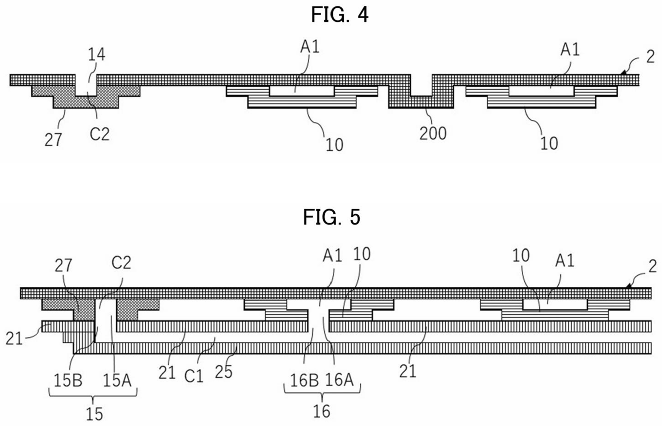

In this example, as illustrated in Fig. 3 and Fig. 4, a part of the substrate section 2 is processed into a recess part 200 that is exposed so as to protrude from the opening 100 of the metal plate 11 in a direction from the front side to the back side of the substrate section 2. This increases the area of the substrate section 2, thereby improving its heat dissipation efficiency. Note that in a case where no opening is provided in the metal plate 11, it is not necessary to provide the recess part 200 either. That is, the recess part 200 is not an essential component.

As illustrated in Fig. 2, the cooling system further includes a coolant supply section C and a coolant discharge section D for the first to fourth coolant passages A1 to A4. The coolant supply section C includes a coolant supply passage C1 and a connection path C2.

As illustrated in Fig. 5, the coolant supply passage C1 is formed between a long bottom plate 21 and a long top plate 25. The bottom plate 21 is overlapped with the recess part 10 of each of the coolant passages A1 to A4, and is disposed, at ends of the first to fourth coolant passages A1 to A4, perpendicularly to a direction in which the coolant passages A1 to A4 are arranged. More specifically, as illustrated in Fig. 2, the coolant supply passage C1 is disposed across the edges of the first to fourth coolant passages A1 to A4 in plan view.

First to fourth outlet ports 16B are formed on the bottom plate 21 defining the coolant supply passage C1, and the first to fourth outlet ports 16B are opposite from openings 16A formed at the peripheral walls at the recess parts 10 of the coolant passages A1 to A4, respectively. The outlet port 16B and the opening 16A form the introduction opening 16 for cooling water.

In order to control an amount by which the cooling water is introduced into the coolant passages A1 to A4, it is preferable to adjust the opening areas (passage cross-sectional areas) of the first to fourth outlet ports 16B. For example, the passage cross-sectional areas are increased successively along the flow direction of the cooling water. Further, it is preferable that the passage cross-sectional areas of the first to fourth outlet ports 16B be each smaller than the passage cross-sectional area of the coolant supply passage C1. Here, the passage cross-sectional area refers to the area of a cross-section perpendicular to a flow direction of the coolant.

An inlet port 15B for the cooling water is formed at one end of the coolant supply passage C1. This inlet port 15B communicates with the connection path C2 via an opening 15A of the connection path C2. The connection path C2 is formed between a recess part 27 that is formed by processing a long strip-shaped metal plate 28, and the substrate section 2.

In the metal plate 28, a flange-shaped unprocessed part around the recess part 27 is welded to the substrate section 2 in a liquid-tight manner. An opening 14 that is formed at a predetermined portion of the substrate section 2 communicates with the connection path C2. Cooling water is supplied to this opening 14 from the outside.

In Fig. 2, reference sign D indicates a coolant discharge section. This coolant discharge section D includes a coolant discharge passage D1 and a connection path D2. Since the structure of the coolant discharge passage D1, the manner of connection thereof to the coolant passages A1 to A4, the structure of the connection path D2 and the manner of connection thereof to the coolant discharge passage D1 are the same as those of the coolant supply section, a detailed description thereof is omitted.

As illustrated in Fig. 4 and Fig. 5, the cooling water supplied from the opening 14 passes through the connection path C2 and is introduced into the coolant supply passage C1 through the inlet port 15B via the opening 15A formed on a downstream side in a coolant flow direction of the recess part 27. Thereafter, the cooling water flows into the first coolant passage A1 via the first outlet port 16B, and then the cooling water is supplied to the second coolant passage A2 via the second outlet port, to the third coolant passage A3 via the third outlet port, and to the fourth coolant passage A4 via the fourth outlet port.

The cooling water supplied to the coolant passages A1 to A4 removes heat from the substrate section 2 (actual cooling target substrate section 4) constituting the peripheral walls of the coolant passages A1 to A4, thereby cooling the stacked cells S. Another peripheral wall (other than the substrate section) defining each of the coolant passages A1 to A4, i.e., the recess part 10 of the metal plate 11, is spaced from the recess parts 10 constituting the other coolant passages, and thus the thermal influence from other stacked cells is inhibited.

The cooling water in the coolant passages A1 to A4 flows into the coolant discharge passage D1 from the discharge opening 19, flows into the connection path D2 from an opening 18, and is discharged to the outside from an opening 17.

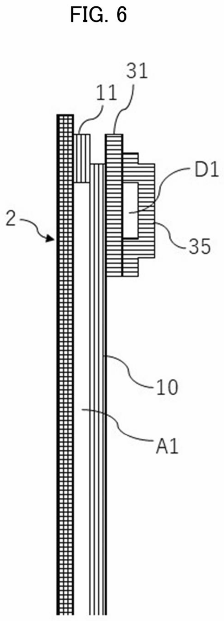

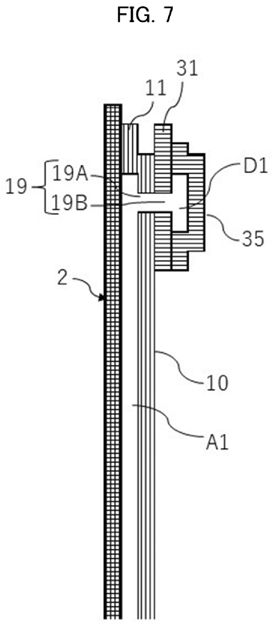

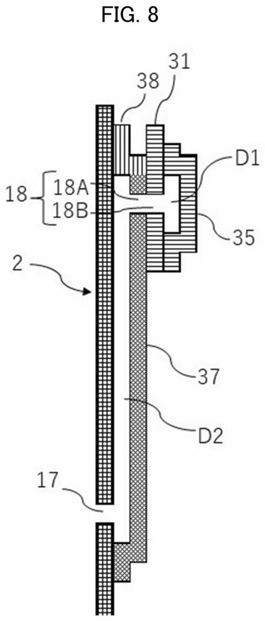

As illustrated in Figs. 6 and 7, the coolant discharge passage D1 is a passage formed by being defined by a bottom plate 31 and a recess part 35. As illustrated in Fig. 8, the connection path D2 is a passage formed by being defined by a recess part 37 and the substrate section 2. The cooling system illustrated in Fig. 2 has a symmetrical structure in the up-and-down direction (the coolant discharge passage D1 is on the upper side, and the coolant supply passage C1 is on the lower side) in the drawing. Therefore, it is also possible to introduce the cooling water from the opening 17 and discharge it from the opening 14.

In the power storage device including a cooling section (coolant passages A) configured as illustrated in Fig. 2, the peripheral walls of the coolant supply passage C1 and the coolant discharge passage D1 are spaced from the substrate section 2. That is, the recess parts 10 constituting the peripheral walls of the coolant passages A1 to A4 are interposed between the bottom plate 21 constituting the peripheral wall of the coolant supply passage C1 and the bottom plate 31 constituting the peripheral wall of the coolant discharge passage D1, and the substrate section 2.

As a result, the cooling water flowing through the coolant supply passage C1 is less susceptible to the thermal influence from the substrate section 2, and is introduced into the coolant passages A1 to A4 under the same temperature conditions. Further, when discharging the cooling water that has been warmed in passing through the coolant passages A1 to A4, the fact that the coolant discharge passage D1 is spaced from the substrate section 2 also makes it possible to prevent the heat of the warmed cooling water from flowing back to the substrate section 2.

In this example, the connection paths C2 and D2 are disposed in the general area 8 of the substrate section 2 where no stacked cells S are disposed. This ensures more reliable thermal insulation between the stacked cells S and the cooling water.

### (Embodiment 2)

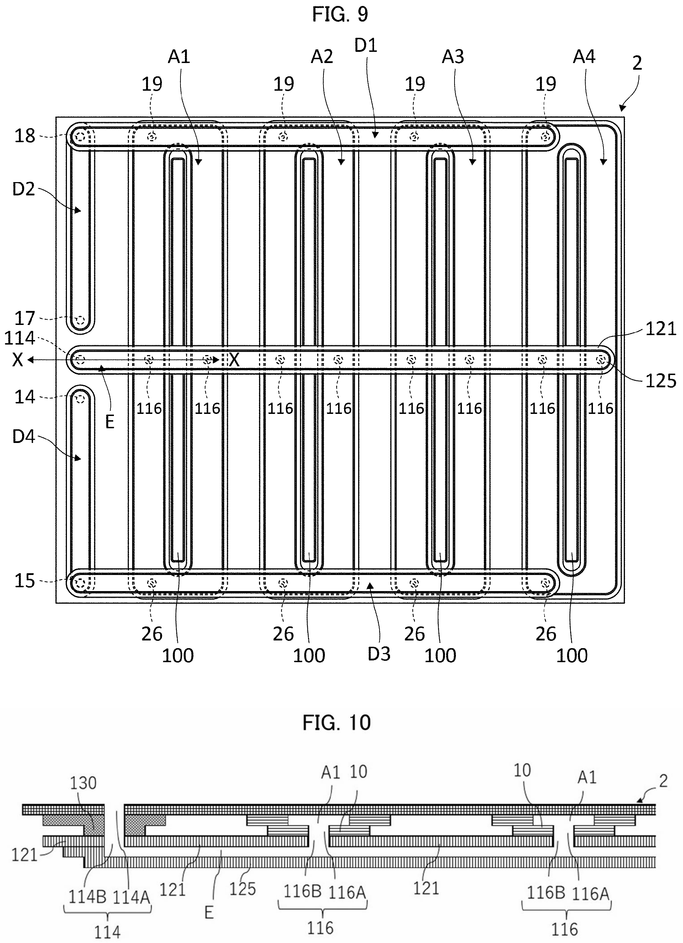

Fig. 9 illustrates a cooling section on a bottom surface of a case section of a power storage device in accordance with Embodiment 2. In Fig. 9, the same elements as those in Fig. 2 are denoted by the same reference signs, and a description thereof is omitted.

Embodiment 2 differs from the cooling system in accordance with Embodiment 1 in including a coolant supply passage E, as illustrated in Fig. 9. Further, Embodiment 2 differs from the cooling system in accordance with Embodiment 1 in that coolant discharge passages D3 and D4 are provided, instead of the coolant supply passages C1 and C2, in positions corresponding to the coolant supply passages C1 and C2. The coolant discharge passages D3 and D4 have the same shapes as those of the coolant supply passages C1 and C2, respectively.

As illustrated in Fig. 9, the coolant supply passage E is provided so as to divide the coolant passages A1 to A4 in an up-and-down direction in a case where the coolant discharge passage D1 is on the upper side and the coolant discharge passage D3 is on the lower side when the back surface (bottom surface) of the substrate section 2 is seen in plan view. More specifically, the coolant supply passage E is preferably disposed so as to divide the coolant passages A1 to A4 into two upper and lower portions.

As illustrated in Fig. 10, the coolant supply passage E is formed by a bottom plate 121 and a recess part 125. The coolant supply passage E is connected to the substrate section 2 via an adaptor 130, and the adaptor 130 plays a role of causing an opening 114A of the substrate section 2 and an inlet port 114B of the bottom plate 121 to communicate with each other. Outlet ports 116B are formed on the bottom plate 121, and introduction openings 116 for the coolant are formed by the outlet ports 116B and openings 116A of the coolant passages A1 to A4.

In the cooling section in Fig. 9, the cooling water supplied from the opening 114A of the substrate section 2 is introduced via the adaptor 130 to the coolant supply passage E through the inlet port 114B. Thereafter, the cooling water is supplied to the coolant passages A1 to A4 via the outlet ports 116B.

The cooling water supplied to the coolant passages removes heat from the substrate section 2 (actual cooling target substrate section 4) constituting the peripheral walls of the coolant passages A1 to A4, thereby cooling the stacked cells S. The cooling water in the coolant passages A1 to A4 flows into the coolant discharge passages D1 and D3 from the discharge openings 26 and 19, similarly flows into the connection paths D2 and D4 from the openings 15 and 18, and is discharged to the outside from the openings 14 and 17.

With the cooling section configured as described above, the coolant supply passage E is disposed so as to be sandwiched between the coolant discharge passages D1 and D3 disposed across the both ends of the coolant passages, so that a distance from the introduction opening to the discharge opening for a coolant in each coolant passage becomes short. Therefore, the cooling efficiency for the stacked cells S is improved.

In this example, since the coolant passages A1 to A4 uniformly cover the entire surfaces of the stacked cells S, the coolant supply passage E is disposed at the centers of the coolant passages A1 to A4. However, in order to uniformly cool the stacked cells S, it is preferable that the coolant supply passage E is disposed on the back surface of the substrate section 2 in a position corresponding to the area where the stacked cells S are disposed. Furthermore, it is more preferable to dispose the coolant supply passage E in a position corresponding to the center of the stacked cells S.

### (Embodiment 3)

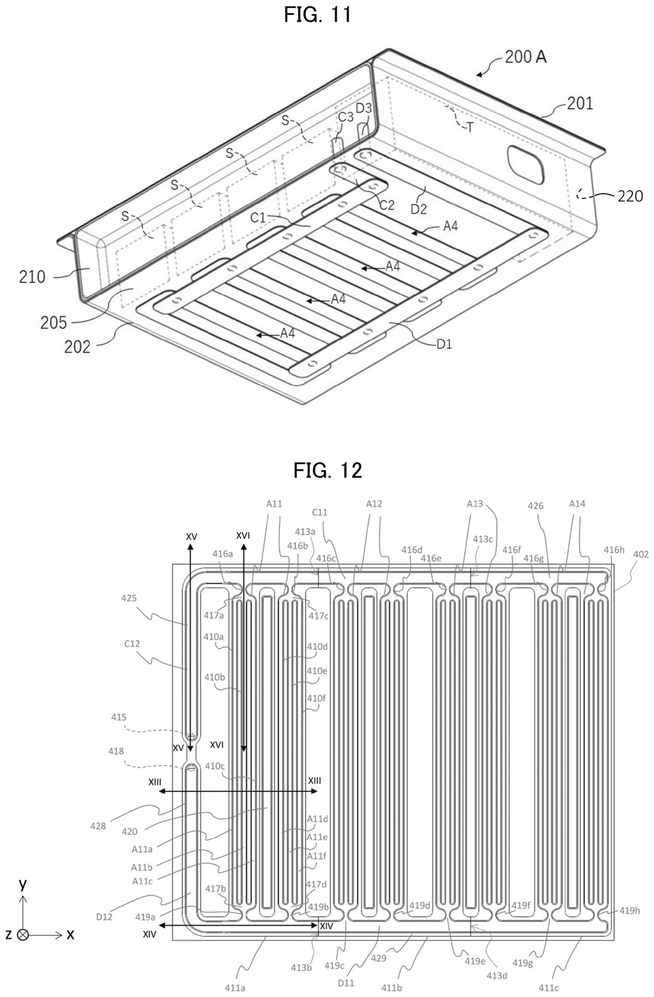

Fig. 11 illustrates a power storage device 200A in accordance with Embodiment 3. Embodiment 3 differs from the power storage devices in accordance with the embodiment above in that the power storage device 200A includes a case section 201, as illustrated in Fig. 11.

As illustrated in Fig. 11, the case section 201 has a substantially rectangular shape in plan view, and is provided therein with the plurality of stacked cells S and a control device T. Note that in the present embodiment, for convenience of description, the coolant flow direction of the coolant supply passage C1 illustrated in Fig. 11 is described as a left-and-right direction, a direction orthogonal to the left-and-right direction is described as a front-and-rear direction (inward-and-outward direction), and a direction orthogonal to the left-and-right direction and the front-rear direction is described as an up-and-down direction.

The case section 201 includes a substrate section 202, a first side plate part 210, and a second side plate part 220. The substrate section 202 is shaped into a substantially U-shape in side view in a front-and-rear direction. The substrate section 202 has a substantially rectangular bottom plate on which passages are disposed, a pair of side plates extending upward from the left and right edges of the bottom plate, and flange parts extending outward from the upper edges of the pair of side plates. The stacked cells S are placed on the bottom plate of the substrate section 202, and a plate material to be joined to the flange parts of the substrate section 202 is disposed on a side that is opposite (upper side) from the bottom plate of the substrate section 202 with the stacked cells S interposed therebetween. The plate material and the substrate section 202 extend further in the front-and-rear direction (outwardly) than the positions of the ends of the stacked cells S disposed inside the case section 201.

The first side plate part 210 is disposed on the side surface on a front side in the front-and-rear direction of the case section 201. The first side plate part 210 is shaped into a box shape opened on an outward side (front side), and a cross-section thereof perpendicular to the left-and-right direction has a U-shape. In a state where the first side plate part 210 is disposed, a part where the extended part of the substrate section 202 and the first side plate part 210 overlap and are connected is an overhang part 205.

The second side plate part 220 is disposed on the side surface on a rear side in the front-and-rear direction of the case section 201. The second side plate part 220 is shaped into a box shape opened on an outward side (rear side), and a cross-section thereof perpendicular to the left-and-right direction has a U-shape. Note that the width of the second side plate part 220 in the front-and-rear direction (a direction in which the first side plate part 210 and the second side plate part 220 are opposite from each other) is shaped to be shorter than the width of the first side plate part 210 in the front-rear direction. That is, when comparing the cross-section of the first side plate part 210 and the cross-section of the second side plate part 220, the length of the first side plate part 210 in the front-and-rear direction is longer than that of the second side plate part 220.

The overhang part 205 is provided with an entry port C3 and an exit port D3 for a coolant. The entry port C3 and the exit port D3 are provided so as to protrude upward from the overhang part 205. An unillustrated supply pipe (coolant supply pipe) and an unillustrated discharge pipe (coolant discharge pipe) for a coolant are connected to the entry port C3 and the exit port D3, respectively. In this example, the entry port C3 and the exit port D3 are provided in the first side plate part 210 (overhang part 205), and the overhang part 205 which is formed by extending the substrate section 202 widely in the front-and-rear direction for disposing, for example, the entry port C3, the exit port D3, and pipes connected to these are provided. On the other hand, by making the width of the second side plate part 220 in the front-and-rear direction narrow, the mechanical rigidity of the case section 201 and the volume for placing the stacked cells S are ensured.

The configurations of the coolant passages A1 to A4, the coolant supply passages C1 and C2, and the coolant discharge passages D1 and D2 constituting the cooling section are the same as those in Fig. 2, and thus a description thereof is omitted.

### (Embodiment 4)

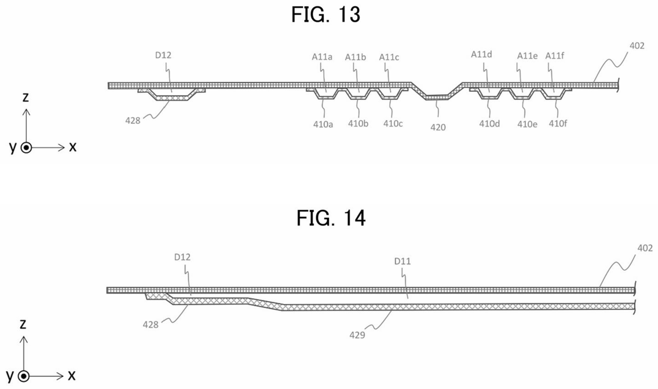

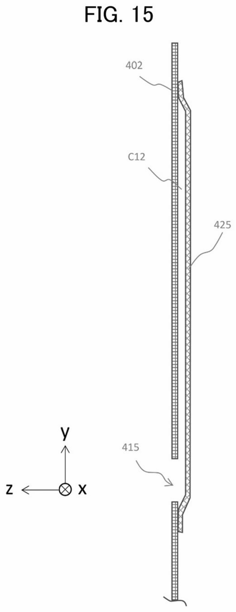

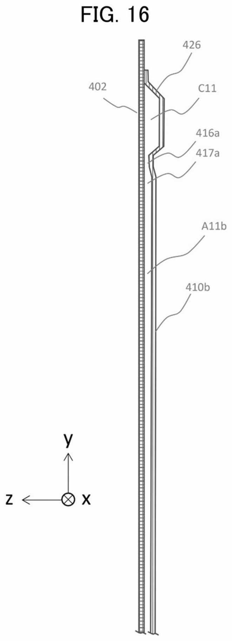

Figs. 12 to 16 illustrate a cooling section on a bottom surface of a case section of a power storage device in accordance with Embodiment 4. A cooling system in accordance with Embodiment 4 includes a substrate section 402 and metal plates 411a to 411c corresponding to the cooling plate, but differs from the power storage devices in accordance with the embodiments above in the shapes of the substrate section 402 and the metal plates 411a to 411c.

As illustrated in Fig. 12, on the back surface (bottom surface) of the substrate section 402, first to fourth coolant passages A11 to A14 are provided as a cooling section. Note that in Fig. 12, a z-axis direction is a thickness direction of the substrate section 402, and x- and y-axis directions are planar directions of the substrate section 402.

The first coolant passage A11 includes a first passage group and a second passage group that have the same shape. The first passage group includes three passages A11a to A11c extending in the y-axis direction and confluence parts 417a and 417b provided at both ends thereof.

The second passage group includes three passages A11d to A11f extending in the y-axis direction and confluence parts 417c and 417d provided at both ends thereof. An opening is provided between the first passage group and the second passage group, and the first passage group and the second passage group are spaced from each other by a recess part 420 provided in the substrate section 402.

Note that a shape protruding toward a z-axis negative direction side is referred to as a recess part. The second to fourth coolant passages A12 to A14 each have the same configuration as that of the first coolant passage A11. As in Embodiment 1, recess parts 410 are formed in the metal plates 411a to 411c so that the first to fourth coolant passages A11 to A14 are disposed on the back surface of the substrate section 402 so as to be opposite from the area where the stacked cells S are disposed.

The first to fourth coolant passages A11 to A14 are disposed opposite from the corresponding stacked cells S with the substrate section 402 interposed therebetween. In each stacked cell S, single cells are stacked in the y-axis direction, which is the coolant flow direction, of the first to fourth coolant passages A11 to A14. The stacked cells S are disposed in parallel in the x-axis direction. The stacked cells S opposite from the first to fourth coolant passages A11 to A14 correspond to first to fourth cell bodies.

The first to fourth coolant passages A11 to A14 are disposed in this order in an x-axis positive direction. The first to fourth coolant passages A11 to A14 are spaced from each other. Coolant supply passages C11 and C12 and coolant discharge passages D11 and D12 are disposed across peripheries of the first to fourth coolant passages A11 to A14. The coolant supply passage C11 is provided at the end of the substrate section 402 in the y-axis positive direction, and the coolant supply passage C12 is provided at the end of the substrate section 402 in the x-axis negative direction.

The end of the coolant supply passage C11 in the x-axis negative direction is connected to the end of the coolant supply passage C12 in the y-axis positive direction, and the coolant supply passages C11 and C12 have a substantially L-shape as a whole. The coolant discharge passage D11 is provided at the end of the substrate section 402 in the y-axis negative direction, and the coolant discharge passage D12 is provided at the end of the substrate section 402 in the x-axis negative direction. The end of the coolant discharge passage D11 in the x-axis negative direction is connected to the end of the coolant discharge passage D12 in the y-axis negative direction, and the coolant discharge passages D11 and D12 have a substantially L-shape as a whole.

The first to fourth coolant passages A11 to A14, the coolant supply passages C11 and C12, and the coolant discharge passages D11 and D12 are disposed on the same plane (on an xy plane), and the coolant supply passages C11 and C12 and the coolant discharge passages D11 and D12 are disposed so as to surround the first to fourth coolant passages A11 to A14.

The substrate section 402 is a flat plate, and the coolant supply passages C11 and C12, the first to fourth coolant passages A11 to A14, and the coolant discharge passages D11 and D12 are disposed along the back surface of the substrate section 402 so as not to overlap each other. The area where the coolant supply passages C11 and C12 and the coolant discharge passages D11 and D12 are disposed is an area that is not opposite from the stacked cells S with the substrate section 402 interposed therebetween.

The first to fourth coolant passages A11 to A14 have a shape that is line-symmetrical with respect to a symmetry axis extending in the x-axis direction at the center of the substrate section 402 in the y-direction, and the coolant supply passages C11 and C12 and the coolant discharge passages D11 and D12 similarly have the shape that is line-symmetrical with respect to this symmetry axis.

The metal plate 411a includes recess parts 410a to 410f and recess parts 425, 426, 428, and 429. The substrate section 402 and the recess parts 410a to 410f constitute the peripheral wall of the first coolant passage A11. As such, the first coolant passage A11 is defined by the recess parts 410a to 410f and the substrate section 402.

In other words, the recess parts 410a to 410f and the substrate section 402 define the peripheral wall of the coolant passage. The recess parts 410a to 410f can be referred to as "coolant passage forming recess part" in the cooling plate. The second coolant passages A12 to A14 each have the same configuration as that of the first coolant passage A11.

The substrate section 402 and a recess part 426 constitute the peripheral wall of a part of the coolant supply passage C11. The peripheral wall of the coolant supply passage C12 is constituted by the substrate section 402 and a recess part 425. The substrate section 402 and a recess part 429 constitute the peripheral wall of a part of the coolant discharge passage D11. The peripheral wall of the coolant discharge passage D12 is constituted by the substrate section 402 and a recess part 428.

The recess parts 425 and 426 can be referred to as "coolant supply passage forming recess part". The recess parts 428 and 429 can be referred to as "coolant discharge passage forming recess part". In the present embodiment, the coolant supply section forming recess part corresponds to the coolant supply passage forming recess part, and the coolant discharge section forming recess part corresponds to the coolant discharge passage forming recess part.

Although reference numerals are omitted, similarly, on the metal plate 411b, recess parts constituting the peripheral wall of the second coolant passage A12, the peripheral walls of the first passage group of the third coolant passage A13, the peripheral wall of a part of the coolant supply passage C11, and the peripheral wall of a part of the coolant discharge passage D11 are formed.

Further, on the metal plate 411c, recess parts constituting the peripheral wall of the fourth coolant passage A14, the peripheral walls of the second passage group of the third coolant passage A13, the peripheral wall of a part of the coolant supply passage C11, and the peripheral wall of a part of the coolant discharge passage D11 are formed.

The metal plate 411a and the metal plate 411b are connected to each other via a connection part 413a and a connection part 413b. The metal plate 411b and the metal plate 411c are connected to each other via a connection part 413c and a connection part 413d. Each of the connection parts 413a to 413d can connect the metal plates to be connected to each other, for example, by butt-welding the opposing surfaces of the metal plates.

Assuming that the metal plate 411a is a first plate and the metal plate 411b is a second plate, that a part of the recess part 426 provided within the metal plate 411a is a first coolant supply passage forming recess part, and that a part of the recess part 426 provided within the metal plate 411b is a second coolant supply passage forming recess part, the first and second coolant supply passage forming recess parts are connected by joining the first plate and the second plate. This forms a part of the coolant supply passage C11.

Further, assuming that a part of the recess part 429 provided within the metal plate 411a is a first coolant discharge passage forming recess part and that a part of the recess part 429 provided within the metal plate 411b is a second coolant discharge passage forming recess part, the first and second coolant discharge passage forming recess parts are connected by joining the first plate and the second plate. This forms a part of the coolant discharge passage D11. Furthermore, the cooling plate includes a metal plate 411c including a coolant passage forming recess part, a coolant supply passage forming recess part, and a coolant discharge passage forming recess part, as in the case of the first and second plates. Also by joining the metal plate 411b and the metal plate 411c, their respective coolant supply passage forming recess parts and coolant discharge passage forming recess parts are also connected in the same manner.

Openings 415 and 418 are provided in positions lying at the end of the substrate section 402 in the x-axis negative direction and substantially at the center of the substrate section 402 in the y-direction. The opening 415 corresponds to an inlet port through which the cooling water (coolant) is introduced into the coolant supply passage C12. The opening 418 corresponds to a discharge opening through which the cooling water is discharged from the coolant discharge passage D12.

The coolant supply passage C11 is connected to the first to fourth coolant passages A11 to A14 via the outlet ports 416a to 416h, respectively. The coolant discharge passage D11 is connected to the first to fourth coolant passages A11 to A14 via the discharge ports 419a to 419h.

The passage cross-sectional areas of the outlet ports 416a to 416h are each smaller than the passage cross-sectional area of the coolant supply passage C11, and the outlet ports 416a to 416h function as orifices. Similarly, the passage cross-sectional areas of the discharge ports 419a to 419h are each smaller than the passage cross-sectional area of the coolant discharge passage D11, and the discharge ports 419a to 419h function as orifices. The function as orifices allows for adjustment of the flow rate of the cooling water flowing into the first to fourth coolant passages A11 to A14.

The cooling water introduced from the opening 415 into the coolant supply passage C12 flows through the coolant supply passage C12 in the y-axis positive direction and is introduced into the coolant supply passage C11. Further, the cooling water flows through the coolant supply passage C11 in the x-axis positive direction and is introduced into the first to fourth coolant passages A11 to A14 via the outlet ports 416a to 416h.

In the first coolant passage A11, the streams of cooling water introduced into the confluence part 417a via the outlet port 416a from the coolant supply passage C11 flow in the respective passages A11a to A11c in the y-axis negative direction and merge at the confluence part 417b. Further, the cooling water is discharged into the coolant discharge passage D11 via the discharge port 419a from the confluence part 417b.

Similarly, the cooling water introduced into the confluence part 417c from the outlet port 416b flows through the passages A11d to A11f in the y-axis negative direction, and is discharged into the coolant discharge passage D11 via the confluence part 417d and the discharge port 419b. The cooling water introduced from the coolant supply passage C11 into the second to fourth coolant passages A12 to A14 via the outlet ports 416c to 416h is similarly discharged into the coolant discharge passage D11 via the discharge ports 419c to 419h.

The cooling water discharged into the coolant discharge passage D11 flows in the x-axis negative direction and is introduced into the coolant discharge passage D12. Further, the cooling water flows through the coolant discharge passage D12 toward the opening 418 in the y-axis positive direction and is discharged from the opening 418.

As such, the cooling water is supplied independently to the coolant passages A11 to A14 in parallel, and the orifice functions of the discharge ports 419a to 419h enable control over flow rates of the cooling water in the respective coolant passages A11 to A14 in accordance with heat generation capacities of the stacked cells S covered by the respective coolant passages A11 to A14.

With the cooling section configured as described above, by disposing the coolant supply passages C11 and C12 and the coolant discharge passages D11 and D12 with use of the back surface of the area at the periphery of the substrate section 402 where no stacked cells S are disposed, it is possible to reduce the height of the cooling plate (width in the z-axis direction, which is the thickness direction of the substrate section 402).

Further, by connecting a plurality of metal plates 411a to 411c to each other and using them as a cooling plate, it is possible to constitute the peripheral walls of the coolant passages, thus making it possible to easily increase and decrease the coolant passages A11 to A14. For example, by inserting two metal plates 411b between the metal plate 411b and the metal plate 411c illustrated in Fig. 12, it is possible to produce a cooling system including up to fifth and sixth coolant passages. As illustrated in Fig. 12, since the metal plates 411a to 411c are provided with recess parts formed to have a shape that is line-symmetrical with respect to a symmetry axis extending in the x-axis direction at the center in the y-direction, it is also possible to combine the metal plates 411a to 411c with each other with orientations of some metal plates reversed in the y-axis direction.

In the above configuration, the metal plates 411a to 411c correspond to a first plate, a second plate, and a third plate, respectively, and correspond to a cooling plate when being in a state of being welded via the connection parts 413a to 413d. A plurality of openings are formed in such a cooling plate.

More specifically, the openings are formed:
(1) between the coolant supply passage C12 and the coolant discharge passage D12, and the first passage group of the first coolant passage A11,
(2) between the first passage group and the second passage group of the first coolant passage A11,
(3) between the second passage group of the first coolant passage A11 and the first passage group of the second coolant passage A12,
(4) between the first passage group and the second passage group of the second coolant passage A12,
(5) between the second passage group of the second coolant passage A12 and the first passage group of the third coolant passage A13,
(6) between the first passage group and the second passage group of the third coolant passage A13,
(7) between the second passage group of the third coolant passage A13 and the first passage group of the fourth coolant passage A14, and
(8) between the first passage group and the second passage group of the fourth coolant passage A14.
The coolant passages A11 to A14 are spaced from each other by the openings formed in the above positions (1) to (8). Furthermore, the first passage group and the second passage group in each of the coolant passages A11 to A14 are also spaced from each other.

The cooling system in accordance with the present embodiment can be manufactured, for example, by the following manufacturing method. This manufacturing method includes: a step of preparing a substrate section; a first shaping step of shaping a first plate including a first coolant passage forming recess part and a first coolant supply passage forming recess part; a second shaping step of shaping a second plate including a second coolant passage forming recess part and a second coolant supply passage forming recess part; a first welding step of welding opposing surfaces of the first and second plates; a second step of welding opposing surfaces of the first and second coolant supply passage forming recess parts; and a step of welding the cooling plate obtained through the first and second welding steps to the back surface of the substrate section.

In the first shaping step, the first plate is shaped so that a portion thereof to be welded to the second plate protrudes relative to the other portions thereof. In the second shaping step, the second plate is shaped so that a portion thereof to be welded to the first plate protrudes relative to the other portions thereof.

The outer periphery of the cooling plate and the peripheries of the openings formed in the above positions (1) to (8) are welded to the back surface of the substrate section 402 in a liquid-tight manner (the same applies to the following embodiments). As a welding method, a conventionally known method can be employed.

### (Embodiment 5)

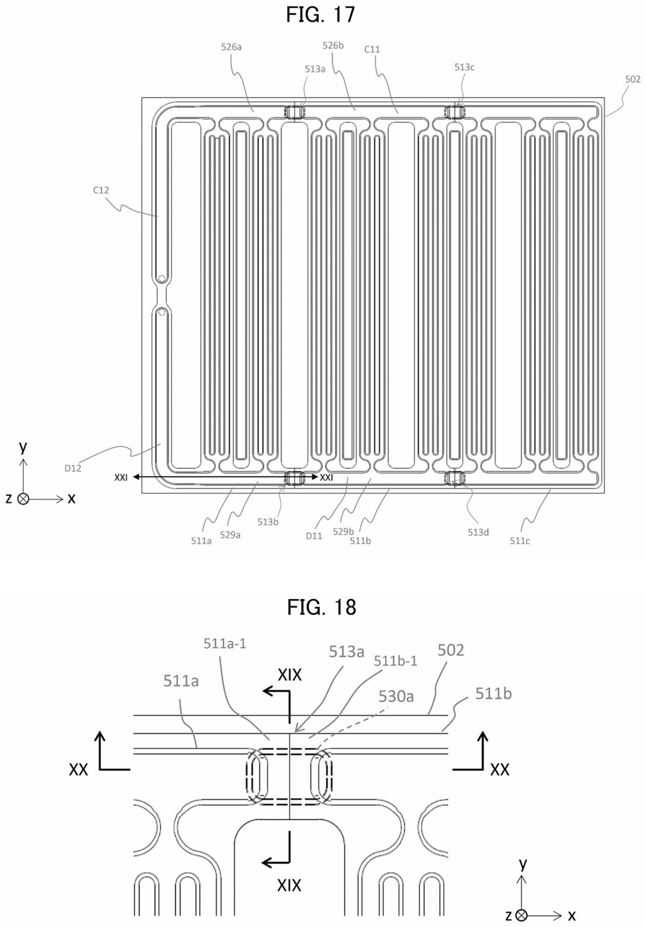

Figs. 17 to 21 illustrate a cooling section on a bottom surface of a case section of a power storage device in accordance with Embodiment 5. In Figs. 17 to 21, the same elements as those in Fig. 12 and the like are denoted by the same reference signs, and a description thereof is omitted. In addition, reference numerals are omitted for some of the same elements.

Embodiment 5 differs from the power storage device shown in Embodiment 4 in that in the cooling section in Fig. 17, connection parts 513a to 513d connecting metal plates 511a to 511c to each other are formed into flat plate shapes, and a step part is provided on a substrate section 502 opposite from a part serving as each of the flat plate shapes. Note that the term "flat plate shape" is not intended to be strictly limited to a flat plate, and may encompass a substantially flat plate shape.

As illustrated in Figs. 17 to 21, in positions opposite from the connection parts 513a and 513b, the substrate section 502 is provided with step parts 530a and 530b displaced in a z-axis positive direction.

Although a cross-sectional view is not shown, similarly in the connection parts 513c and 513d that connect the metal plate 511b and the metal plate 511c to each other, the substrate section 502 includes step parts in positions opposite from the connection parts 513c and 513d, and the metal plates 511b and 511c have a substantially flat plate shape.

As illustrated in Figs. 18 to 20, the substrate section 502 includes the step part 530a, so that it is possible to ensure a passage cross-sectional area of the coolant supply passage C11. Thus, it is possible to form a substantially flat plate shape in the vicinity of the connection part 513a. The opposing surface (surface opposite from the metal plate 511b) of the metal plate 511a having a substantially flat plate shape and the opposing surface (surface opposite from the metal plate 511a) of the metal plate 511b having a substantially flat plate shape can be connected to each other via the connection part 513a by, for example, welding, thus enabling easy, reliable connection.

In the above configuration, in order to form the connection part 513a into a substantially flat plate shape, a recess part 526a forming the peripheral wall of the coolant supply passage C11 on the metal plate 511a (first plate) rises in the z-axis positive direction toward the connection part 513a (toward the x-axis positive direction), reaches a flat plate part of the metal plate 511a, and terminates. The terminal end of the recess part 526a is connected integrally to a first plate connection part (511a-1), which is a flat plate part of the metal plate 511a. The first plate connection part (511a-1) corresponds to a protrusion element that protrudes in the x-axis positive direction relative to a part of the metal plate 511a where the recess part 526a is formed.

Similarly, a recess part 526b forming the peripheral wall of the coolant supply passage C11 on the metal plate 511b (second plate) rises in the z-axis positive direction toward the connection part 513a (toward an x-axis negative direction), reaches a flat plate part of the metal plate 511b, and terminates. The terminal end of the recess part 526b is connected integrally to a second plate connection part (511b-1), which is a flat plate part of the metal plate 511b. The second plate connection part (511b-1) corresponds to a protrusion element that protrudes in the x-axis negative direction relative to a part of the metal plate 511b where the recess part 526b is formed.

As describe above, the metal plate 511a (one example of the first plate) includes the substantially flat plate-shaped first plate connection part 511a-1 continuous from the first coolant supply passage forming recess part, and the metal plate 511b (one example of the second plate) includes the substantially flat plate-shaped second plate connection part 511b-1 continuous from the second coolant supply passage forming recess part. The metal plate 511a and the metal plate 511b are connected by joining the opposing surfaces of the first plate connection part 511a-1 and the second plate connection part 511b-1.

The substrate section 502 includes the step part 530a displaced toward the front surface of the substrate section 502 in a position opposite from the first connection part 511a-1 and the second plate connection part 511b-1, so that the coolant supply passage C11 is formed by the step part 530a and the first and second plate connection parts 511a-1 and 511b-1 in the connection part 513a. In the connection part 513a, while ensuring the coolant supply passage C11, the opposing surface of the first plate connection part 511a-1 having a substantially flat plate shape and the opposing surface of the second plate connection part 511b-1 having a substantially flat plate shape can be joined by, for example, welding, thus enabling easy, reliable connection.

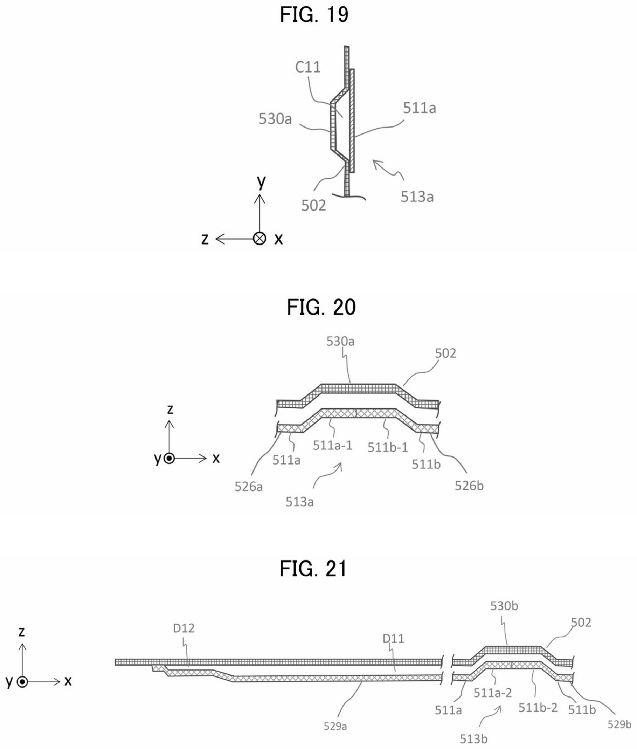

As illustrated in Fig. 21, the substrate section 502 includes the step part 530b, so that it is possible to, also in the connection part 513b of the coolant discharge passage D11, ensure a passage cross-sectional area of the coolant discharge passage D11. Thus, it is possible to form a substantially flat plate shape in the vicinity of the connection part 513b. The opposing surface (surface opposite from the metal plate 511b) of the metal plate 511a having a substantially flat plate shape and the opposing surface (surface opposite from the metal plate 511a) of the metal plate 511b having a substantially flat plate shape can be connected to each other via the connection part 513b by, for example, welding, thus enabling easy, reliable connection.

In this case, a third plate connection part (511a-2) is provided which is a protrusion element protruding in the x-axis positive direction relative to a part of the metal plate 511a (first plate) where a recess part 529a is formed. Similarly, a fourth plate connection part (511b-2) is provided which is a protrusion element protruding in the x-axis negative direction relative to a part of the metal plate 511b (second plate) where a recess part 529b is formed. Although not illustrated, similarly, via the other connection parts 513c and 513d, the metal plate 511b and the metal plate 511c are connected to each other by, for example, welding at their opposing surfaces having a substantially flat plate shape.

### (Embodiment 6)

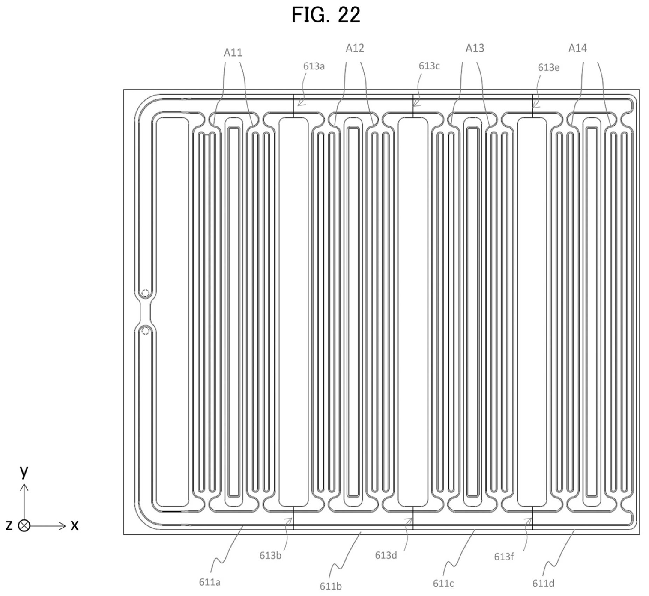

Fig. 22 illustrates a cooling section on a bottom surface of a case section of a power storage device in accordance with Embodiment 6. In Fig. 22, the same elements as those in Fig. 12 and the like are denoted by the same reference signs, and a description thereof is omitted. In addition, reference numerals are omitted for some of the same elements.

Embodiment 6 differs from the power storage device in accordance with Embodiment 4 in that in the cooling section in Fig. 22, the cooling plate thereof is constituted by four metal plates 611a to 611d.

The metal plates 611a to 611d include the first to fourth coolant passages A11 to A14, respectively. The metal plate 611b and the metal plate 611c have the same shape. The metal plates 611a to 611d are connected to each other via connection parts 613a to 613f. The cooling plate is constituted by the four metal plates 611a to 611d, and the metal plates 611a to 611d correspond to the first to fourth coolant passages A11 to A14 corresponding to the four stacked cells S, respectively, thus enabling more flexible, easy increase and decrease of the coolant passages.

Note that the metal plates 411a to 411c illustrated in Fig. 12 and the metal plates 611a to 611d may be combined. The number of metal plates and the number of pairs of stacked cells S and the corresponding coolant passages may be the same or may be different. For example, the first to fourth coolant passage forming recess parts constituting the peripheral walls of the first to fourth coolant passages A11 to A14 may be provided in four metal plates as in the present embodiment, may be provided in fewer metal plates, such as two or three metal plates, or may be provided in more metal plates, such as five or more metal plates.

### (Embodiment 7)

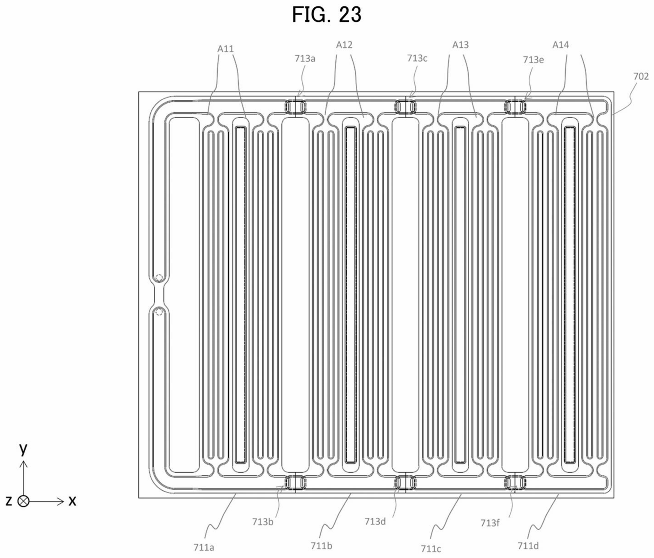

Fig. 23 illustrates a cooling section on a bottom surface of a case section of a power storage device in accordance with Embodiment 7. In Fig. 23, the same elements as those in Fig. 17 are denoted by the same reference signs, and a description thereof is omitted. In addition, reference numerals are omitted for some of the same elements.

In the cooling section in Fig. 23, the cooling plate thereof is constituted by four metal plates 711a to 711d, as in the case of that in Fig. 22. Further, in the cooling section in Fig. 23, similarly to that in Fig. 17, connection parts 713a to 713f connecting the metal plates 711a to 711d to each other have substantially flat plate shapes, and a step part is provided on a substrate section 702 opposite from a part serving as each of the substantially flat plate shapes.

### (Embodiment 8)

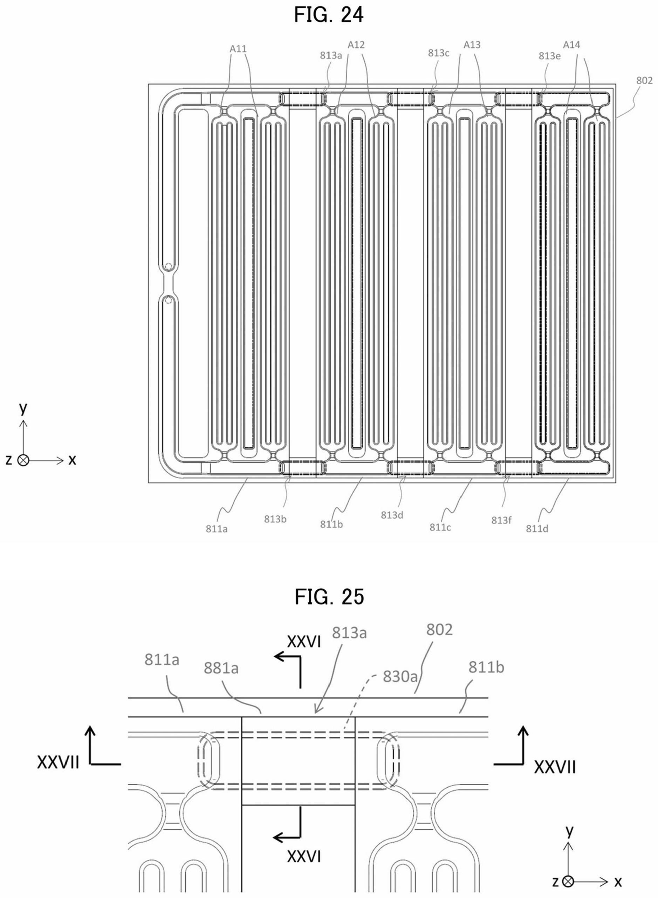

Figs. 24 to 27 illustrate a cooling section on a bottom surface of a case section of a power storage device in accordance with Embodiment 8. In Fig. 24, the same elements as those in Fig. 17 are denoted by the same reference signs, and a description thereof is omitted. In addition, reference numerals are omitted for some of the same elements.

In the cooling section in Fig. 24, the cooling plate thereof includes four metal plates 811a to 811d and plate-shaped members 881a to 881f having a flat plate shape. In the example in Fig. 17 (the same applies to Fig. 22), the metal plates 511a to 511c (metal plates 611a to 611d in the example in Fig. 22) each include the first and second plate connection parts, which are flat plate-shaped protrusion elements. In this example, plate-shaped members are substituted for such plate connection parts. These plate-shaped members are each to be welded to the terminal ends of the coolant supply passage forming recess parts of the opposing metal plates.

That is, one end of the plate-shaped member 881a is welded to the end, in the x-axis positive direction, of the coolant supply passage forming recess part located in the y-axis positive direction on the metal plate 811a, and the other end of the plate-shaped member 881a is welded to the end, in the x-axis negative direction, of the coolant supply passage forming recess part located in the y-axis positive direction on the metal plate 811b. One end of the plate-shaped member 881b is welded to the end, in the x-axis positive direction, of the coolant discharge passage forming recess part located in the y-axis negative direction of the metal plate 811a, and the other end of the plate-shaped member 881b is welded to the end, in the x-axis negative direction, of the coolant discharge passage forming recess part located in the y-axis negative direction on the metal plate 811b. The plate-shaped members 881c to 881f are similarly welded to the opposing metal plates 811b to 811d.

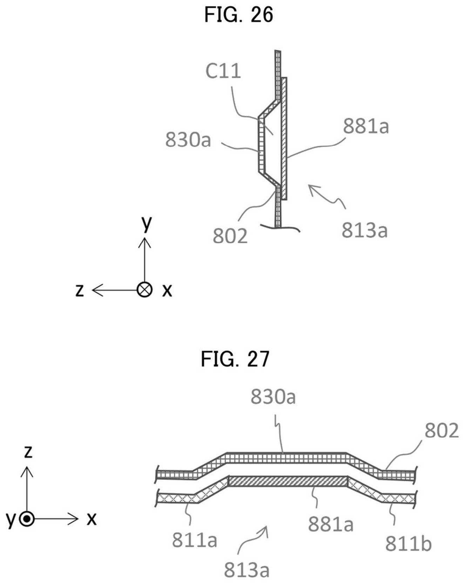

Since a step part 830a is formed in the area of the substrate section 802 opposite from the connection part 813 (see Figs. 26 and 27), the function of the coolant supply passage C11 is ensured. Although a cross-sectional view is not shown, also in the connection part 813b, the plate-shaped member 881b can be substituted for the third plate connection part 511a-2 and the fourth plate connection part 511b-2, which are the protrusion elements illustrated in Fig. 20. Since a step part is also provided in the area of the substrate section 802 opposite from the connection part 813b, the function of the coolant discharge passage D11 is ensured. The same applies to the connection parts 813c to 813f.

Use of the plate-shaped members described above can omit the protrusion elements (first to fourth plate connection parts 511a-1, 511b-1, 511a-2, and 511b-2: see Figs. 18 to 21). This improves the yield in the manufacture of the metal plate 811a and the metal plate 811b, and can reduce the manufacturing cost. The same applies to the other metal plates 811c to 811d.

In the above-described Embodiments 1 to 8, the first to fourth coolant passages A11 to A14 are configured such that three parallel passages are provided in each of the first and second passage groups, but this should not be construed as a limitation. The number of passages included in each passage group of the first to fourth coolant passages A11 to A14 can be changed as appropriate.

### (Embodiment 9)

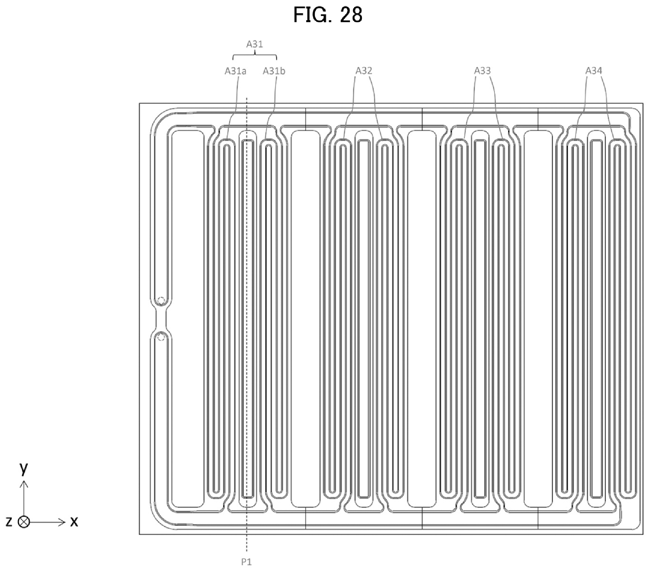

Fig. 28 illustrates a cooling section on a bottom surface of a case section of a power storage device in accordance with Embodiment 9. In Fig. 28, the same elements as those in Fig. 22 are denoted by the same reference signs, and a description thereof is omitted. In addition, reference numerals are omitted for some of the same elements.

The cooling section in Fig. 28 differs from the power storage device in accordance with Embodiment 6 in the form of first to fourth coolant passages A31 to A34. The first to fourth coolant passages A31 to A34 have the same shape, and are each constituted by two passages (for example, passages A31a and 31b) that meander in the y-axis direction. The passage A31a and the passage A31b are configured to be line-symmetrical with respect to a symmetry axis P1 parallel to the y-axis illustrated in Fig. 28.

The other first to fourth coolant passages described in the above embodiments may be replaced with the first to fourth coolant passages A31 to A34.

### (Embodiment 10)

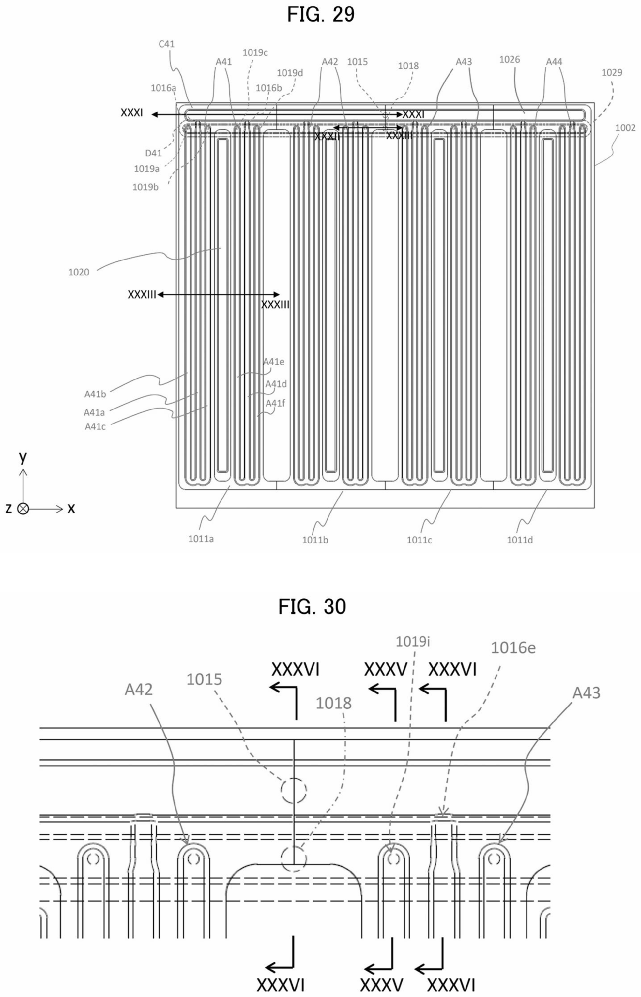

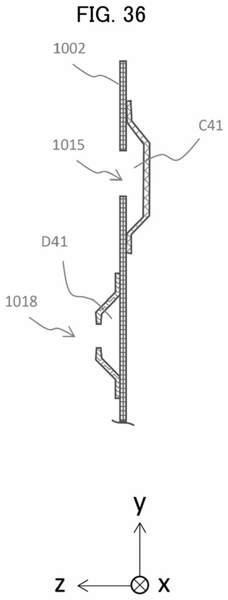

Figs. 29 to 36 illustrate a cooling section on a bottom surface of a case section of a power storage device in accordance with Embodiment 10. In Figs. 29 to 36, the same elements as those in Fig. 12 and the like are denoted by the same reference signs, and a description thereof is omitted. In addition, reference numerals are omitted for some of the same elements.

The power storage device in accordance with Embodiment 10 differs from the power storage device in accordance with Embodiment 6 in the shape of a substrate section 1002 and the shapes of the metal plates 1011a to 1011d corresponding to the cooling plate.

As illustrated in Fig. 29, on the back surface (bottom surface) of the substrate section 1002, first to fourth coolant passages A41 to A44 are provided as a cooling section. A coolant supply passage C41 is provided to the first to fourth coolant passages A41 to A44 at their peripheral parts on the y-axis positive direction side. As illustrated in Figs. 29 to 31, the peripheral walls of the first to fourth coolant passages A41 to A44 and the coolant supply passage C41 are constituted by the back surface side (z-axis negative direction side) of the substrate section 1002 and recess parts (coolant passage forming recess parts 1010 and coolant supply passage forming recess parts 1026) formed on the metal plates 1011a to 1011d.

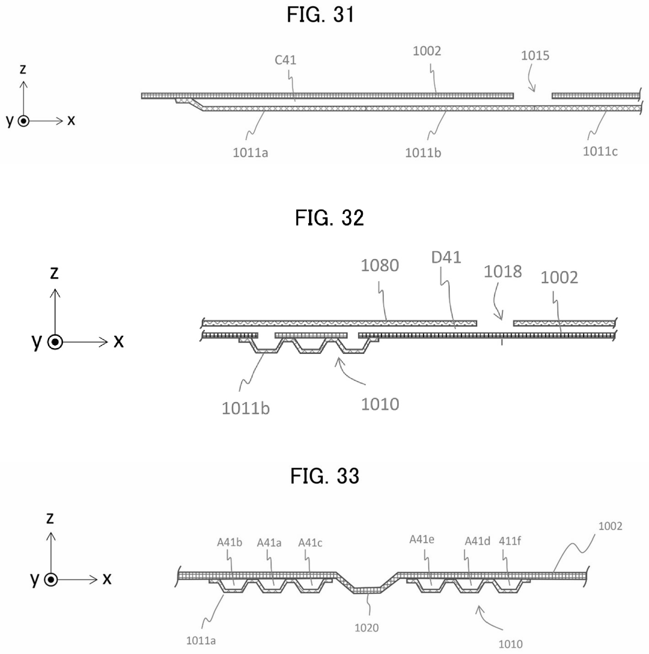

As illustrated in Figs. 29 and 32, on the front surface side (z-axis positive direction side) of the substrate section 1002, a coolant discharge passage D41 is provided in a position opposite from the ends of the first to fourth coolant passages A41 to A44 on the y-axis positive direction side. The peripheral wall of the coolant discharge passage D41 is constituted by the front surface side of the substrate section 1002 and a protrusion part (coolant discharge passage forming protrusion part 1029) formed on the metal plate 1080. Note that a shape protruding toward a z-axis positive direction side is referred to as a protrusion part.

An opening 1015 is provided in a position lying at the end of the substrate section 1002 in the y-axis positive direction and substantially at the center of the substrate section 1002 in the x-axis direction. The opening 1015 corresponds to an inlet port through which the cooling water is introduced into the coolant supply passage C41. An opening 1018 is provided in a position corresponding to substantially the center of the metal plate 1080 in the x-axis direction. The opening 1018 corresponds to a discharge opening through which the cooling water is discharged from the coolant discharge passage D41.

The coolant supply passage C41 is connected to each of the first to fourth coolant passages A41 to A44 via two outlet ports. The coolant discharge passage D41 is connected to each of the first to fourth coolant passages A41 to A44 via four discharge ports.

The coolant supply passage C41 is connected to the first coolant passage A41 via outlet ports 1016a and 1016b. The coolant discharge passage D41 is connected to the first coolant passage A41 via discharge ports 1019a to 1019d. The passage cross-sectional areas of the outlet ports 1016a and 1016b are each smaller than the passage cross-sectional area of the coolant supply passage C41, and the outlet ports 1016a and 1016b function as orifices.

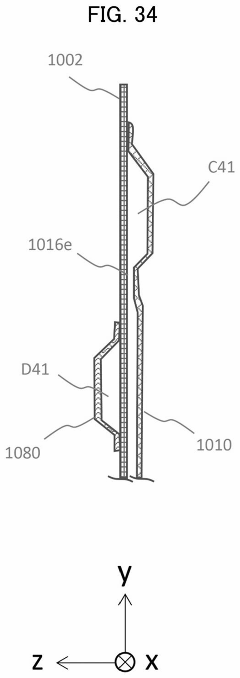

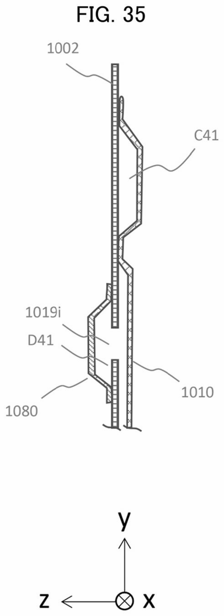

Note that the outlet ports 1016a and 1016b are formed as in the case of a discharge port 1016e illustrated in Fig. 34. Similarly, the passage cross-sectional areas of the discharge ports 1019a to 1019d are each smaller than the passage cross-sectional area of the coolant discharge passage D41, and the discharge ports 1019a to 1019d function as orifices. Note that the discharge ports 1019a to 1019d are each formed as in the case of a discharge port 1019i illustrated in Fig. 35.

The first coolant passage A41 includes a first passage and a second passage that have the same shape. The first passage of the first coolant passage A41 includes an upstream passage A41a extending from the outlet port 1016a toward the y-axis negative direction side, and downstream passages A41b and A41c connected to the end of the upstream passage A41a on the y-axis negative direction side. The downstream passages A41b and A41c are folded back from the end of the upstream passage A41a on the y-axis negative direction side so as to make a U-turn to both sides in the x-axis direction (left and right sides illustrated in Fig. 29) and extend to the discharge ports 1019a and 1019b on the y-axis positive direction side.

Similarly, the second passage of the first coolant passage A41 includes an upstream passage A41d extending from the outlet port 1016b toward the y-axis negative direction side, and downstream passages A41e and A41f connected to the end of the upstream passage A41d on the y-axis negative direction side and extending to the discharge ports 1019c and 1019d. The first passage and the second passage are separated from each other by a recess part 1020 provided in the substrate section 1002.

The cooling water introduced into the coolant supply passage C41 from the opening 1015 is introduced into the first coolant passage A41 via the outlet ports 1016a and 1016b. In the first coolant passage A41, the cooling water flows from the outlet ports 1016a and 1016b through the upstream passages A41a and A41d in the y-axis negative direction, and is introduced into the downstream passages A41b, A41c, A41e, and A41f.

The cooling water flows in the y-axis positive direction in the downstream passages A41b, A41c, A41e, and A41f, and is discharged to the coolant discharge passage D41 via the discharge ports 1019a to 1019d. The cooling water discharged into the coolant discharge passage D41 is discharged from the opening 1018.

The second to fourth coolant passages A42 to A44 each have the same configuration as that of the first coolant passage A41. Similarly to Embodiment 6 and the like, the coolant passage forming recess parts 1010 are formed in the metal plates 1011a to 1011d so that the first to fourth coolant passages A41 to A44 are disposed on the back surface of the substrate section 1002 so as to be opposite from the stacked cells S. The first to fourth coolant passages A41 to A44 are disposed opposite from the corresponding stacked cells S with the substrate section 1002 interposed therebetween.

The first to fourth coolant passages A41 to A44 are disposed in this order in an x-axis positive direction. The first to fourth coolant passages A41 to A44 are separated from each other. The coolant supply passage C41 is disposed at the peripheries of the first to fourth coolant passages A41 to A44. The first to fourth coolant passages A41 to A44 and the coolant supply passage C41 are disposed on the same plane (on an xy plane).

The area where the coolant supply passage C41 is disposed is an area that is not opposite from the stacked cells S with the substrate section 1002 interposed therebetween. The coolant discharge passage D41 is disposed in the vicinity of an area opposite from peripheries of the first to fourth coolant passages A41 to A44 with the substrate section 1002 interposed therebetween. The area where the coolant discharge passage D41 is disposed is an area that is not opposite from the stacked cells S with the substrate section 1002 interposed therebetween.

As in the present embodiment, the first to fourth coolant passages A41 to A44 may be configured to be folded back so as to make a U-turn, and the forms and positioning of the coolant supply passage C41 and the coolant discharge passage D41 may be changed in accordance with the forms of the first to fourth coolant passages A41 to A44.

In the present embodiment, of the coolant supply passage C41 and the coolant discharge passage D41, one is disposed on the back surface side of the substrate section 1002 and the other is disposed on the front surface side of the substrate section. For this reason, even in a case where the outlet ports and the discharge ports of the first to fourth coolant passages A41 to A44 are present in the peripheries on the same side with respect to the first to fourth coolant passages A41 to A44, the height (width in the z-axis direction) of the cooling plate can be reduced.

In the above embodiments, a power storage device is taken as an example of a battery device, but this should not be construed as a limitation. Alternatively, a primary battery or a fuel cell may be used. Further, the stacked cell S is taken as an example of a cell body, but this should not be construed as a limitation. Alternatively, a single cell including a pair of electrodes may be used, or a module into which single cells or stacked cells are formed may be used. Further, the cell body is one cell having the ability to discharge electric power, a stacked body in which such cells are stacked, or a module of these, and the "cell" herein encompasses secondary batteries represented by, for example, the lithium battery that generates heat during discharge and/or charge, and fuel cells using hydrogen or the like as a fuel gas.

In the above embodiments, the case where the configurations that function as an orifice are provided in both the outlet port and the discharge port has been described as an example, but this should not be construed as a limitation. The configuration that functions as an orifice may be provided in only one of the outlet port and the discharge port. Further, the configuration that functions as an orifice does not have to be uniform, and the amount of restriction thereof may be adjusted as appropriate for each port. For example, the amount of restriction may be different between an outlet port and a discharge port connected to the same coolant passage.

Further, for example, the amount of restriction may be different between outlet ports connected to different coolant passages, and similarly, the amount of restriction may be different between discharge ports connected to different coolant passages. As such, by providing a configuration that functions as an orifice at the inflow part and/or the discharge part of each coolant passage as appropriate, the flow rates of flows through the coolant passages in parallel can be individually and optimally set.

In the above embodiments, the substrate section is described as being flat plate-shaped as one example, but this should not be construed as a limitation. Further, at least the material forming the back surface of the substrate section is also required to have thermal conductivity and coolant corrosion resistance, and for example, stainless steel is employed as such a material.

### (Effects)

A cooling system in accordance with Aspect 1 of the present disclosure is a cooling system for a battery device configured to include: a substrate section of a case containing a cell body of the battery device; a cooling plate attached to the substrate section; a first coolant passage; and a second coolant passage separated from the first coolant passage, the substrate section having a back surface constituting a peripheral wall of the first coolant passage and a peripheral wall of the second coolant passage, the cooling plate including a first plate forming another peripheral wall of the first coolant passage and a second plate forming another peripheral wall of the second coolant passage, the first plate and the second plate being attached to the back surface of the substrate section in an area where the cell body is disposed.

According to the above configuration, the first coolant passage and the second coolant passage share the back surface of the substrate section of the case as a peripheral wall, and thus enable efficient cooling of the cell bodies inside the case with use of the coolant, such as cooling water, flowing through the passages. Further, the first coolant passage and the second coolant passage are separated from each other, and the first plate constituting another peripheral wall (peripheral wall other than the substrate section; the same applies hereinafter) of the first coolant passage and the second plate constituting another peripheral wall of the second coolant passage are attached to the back surface of the substrate section in the area where the cell bodies are disposed. As a result, in the cooling system for a battery device in accordance with Aspect 1, the coolant passages (first and second coolant passages) of the cooling section use, as their peripheral walls, a part of the substrate section of the case where the cell bodies are disposed (actual cooling target substrate section).

Therefore, since the coolant is less susceptible to the thermal influence from the area other than the actual cooling target substrate section in the substrate section, heat can be efficiently removed from the actual cooling target substrate section, and thus the cell bodies can be efficiently cooled. For this reason, it is possible to contribute to the improvement in cooling effects of the battery device by the coolant.

Due to a higher output and longer life of power sources, more heat may be generated from the cell bodies. In this case, if the number of the coolant passages in the cooling section is one, a change occurs in the temperature of the coolant between an upstream side and a downstream side (the temperature becomes higher on the latter side), resulting in a difference in cooling capacity. This difference becomes remarkable particularly in a configuration in which the back surface of the substrate section of the case is used as a part of the peripheral wall constituting the coolant passage.

A cooling system in accordance with Aspect 2 of the present disclosure may be configured, in Aspect 1 above, to further include a coolant supply section configured to independently supply a coolant in parallel to the first coolant passage and the second coolant passage.

According to the above configuration, the coolant is independently supplied in parallel to the first coolant passage and the second coolant passage, thereby eliminating the situation in which the temperature of the coolant flowing through one coolant passage is affected by the temperature of the other coolant passage, and it is thus possible to independently control the temperatures of the coolant flowing through the first and second coolant passages. Thus, the cell body covered by the first coolant passage and the cell body covered by the second coolant passage can be cooled under conditions suitable for the respective cell bodies (including the same condition).

Here, independently supplying the coolant to the first coolant passage and the second coolant passage refers to a relationship in which the first coolant passage and the second coolant passage are in parallel in the coolant supply passage. This includes not only cases where a coolant supply passage independent of a coolant supply source is attached to the coolant passages, but also cases where the coolant is supplied to the coolant passages by branching from one coolant supply passage connected to the coolant supply source.

A cooling system in accordance with Aspect 3 of the present disclosure may be configured, in Aspect 2 above, such that the coolant supply section includes a coolant supply passage, and the coolant supply passage includes an inlet port for taking in the coolant, a first outlet port for sending out the coolant to the first coolant passage, and a second outlet port for sending out the coolant to the second coolant passage.

According to the above configuration, as a coolant supply section for independently supplying the coolant to the first and second coolant passages, a coolant supply passage with a simple configuration including one inlet port and two outlet ports (the first outlet port for the first coolant passage and the second outlet port for the second coolant passage) is employed. This makes it possible to reduce the manufacturing cost of the cooling system, and a cooling assembly or battery device that includes this as a component, such as facilitating the assembly of the cooling system.

A cooling system in accordance with Aspect 4 of the present disclosure may be configured, in Aspect 3 above, such that the coolant supply passage has a smaller passage cross-sectional area at the first outlet port and the second outlet port.

According to the above configuration, since the passage cross-sectional areas of the first and second outlet ports are each smaller than each passage cross-sectional area of the other parts of the coolant supply passage, the first and second outlet ports function as orifices.

Since the first and second outlet ports each function as an orifice, these become a resistance to the flow of the coolant introduced into the coolant supply passage. This prevents the coolant from preferentially flowing into either one of the coolant passages. In other words, it is possible to prevent the coolant from not flowing into one of the coolant passages.

As a method for reducing the passage cross-sectional area, the spaces constituted by the peripheral walls may be narrowed, or alternatively, other members such as pins may be inserted into the outlet ports. In the coolant supply passage, by increasing the passage cross-sectional area of each outlet port with increasing distance from the introduction opening for the coolant, the amount of coolant supplied to each coolant passage can be made uniform. Further, it is also possible to adjust the passage cross-sectional areas of the outlet ports in accordance with the cooling capacities required for the respective coolant passages.

A cooling system in accordance with Aspect 5 of the present disclosure may be configured, in Aspect 3 above, such that the coolant supply passage has a peripheral wall separated from the substrate section of the case.

According to the above configuration, the peripheral wall constituting the coolant supply passage is separated from the substrate section of the case, thus enabling reduction in the thermal influence from the substrate section on the coolant flowing in the coolant supply passage. Consequently, the cooling capacity, in the first and second coolant passages, of the coolant supplied from the outlet ports of this coolant supply passage is ensured.

A cooling system in accordance with Aspect 6 of the present disclosure may be configured, in Aspect 5 above, such that the peripheral wall of the first coolant passage and the peripheral wall of the second coolant passage are interposed between the peripheral wall of the coolant supply passage and the substrate section.

According to the above configuration, the first and second coolant passages are interposed between the coolant supply passage and the substrate section. In other words, the coolant supply passage is stacked on the first and second coolant passages, and the coolant supply passage is separated from the substrate section, which is a source of heat generation. This makes it possible to inhibit the thermal influence from the substrate section on the coolant in the coolant supply passage.

A cooling system in accordance with Aspect 7 of the present disclosure may be configured, in Aspect 5 above, such that the coolant supply passage is separated from the first and second coolant passages, and the peripheral wall of the coolant supply passage is formed by the substrate section free of a thermal influence from the cell body.

According to the above configuration, since the coolant supply passage is formed in the substrate section free of a thermal influence from the cell bodies, it is possible to inhibit the thermal influence from the substrate section on the coolant in the coolant supply passage.

A cooling system in accordance with Aspect 8 of the present disclosure may be configured, in Aspect 6 above, such that the case contains a first cell body and a second cell body in parallel, the first coolant passage is disposed opposite from the first cell body, and the second coolant passage is disposed opposite from the second cell body.

According to the above configuration, the first coolant passage and the second coolant passage are disposed opposite from the first cell body and the second cell body, respectively, and thus it is possible to efficiently cool each cell body.

A cooling system in accordance with Aspect 9 of the present disclosure may be configured, in Aspect 8 above, such that the coolant supply passage is disposed so as to overlap the first coolant passage and the second coolant passage and be perpendicular to a direction in which the first coolant passage and the second coolant passage are arranged.

According to the above configuration, the coolant supply passage is disposed so as to overlap the first and second coolant passages. Further, a first outlet port is provided in a portion of the coolant supply passage which is opposite from the first coolant passage, and similarly, a second outlet port is provided in a portion thereof which is opposite from the second coolant passage. In such a configuration, by disposing the coolant supply passage in a direction perpendicular to the arrangement direction of the first and second coolant passages, it is possible to make the length of the coolant supply passage as short as possible. This makes it possible to inhibit the thermal influence from the substrate section on the coolant in the coolant supply passage.

A cooling system in accordance with Aspect 10 of the present disclosure may be configured, in Aspect 9 above, such that in plan view, the coolant supply passage is disposed across an edge of the first coolant passage and an edge of the second coolant passage.

A cooling system in accordance with Aspect 11 of the present disclosure may be configured, in Aspect 9 above, such that in plan view, the coolant supply passage is disposed so as to divide the first coolant passage and the second coolant passage, preferably each into two portions.

A cooling system in accordance with Aspect 12 of the present disclosure may be configured, in Aspect 3 above, such that the coolant supply passage, the first coolant passage, and the second coolant passage are disposed on the same plane parallel to the back surface of the substrate section.

According to the above configuration, for example, in a case where an area where no cell body is disposed is present in the periphery of the substrate section, disposing the coolant supply passage in the area in the periphery enables the coolant supply passage, the first coolant passage, and the second coolant passage to be disposed on the same plane, thus making it possible to reduce the height (width of the substrate in the thickness direction) of the cooling plate.

A cooling system in accordance with Aspect 13 of the present disclosure may be configured, in Aspect 12 above, such that the coolant supply passage is disposed across a periphery of the first coolant passage and a periphery of the second coolant passage so as to surround the first coolant passage and the second coolant passage.

According to the above configuration, by disposing the coolant supply passage so as to surround the coolant passages, the distance between the former and the latter becomes close. This can downsize the cooling plate.

A cooling system in accordance with Aspect 14 of the present disclosure may be configured, in Aspect 12 above, such that the first plate includes a first coolant supply passage forming recess part, the second plate includes a second coolant supply passage forming recess part, the first and second coolant supply passage forming recess parts are connected by joining the first and second plates, and the coolant supply passage is formed by the first and second coolant supply passage forming recess parts joined and the back surface of the substrate section.

According to the above configuration, the independent first and second plates are provided with respective areas where the peripheral walls of the coolant supply passages are formed (first and second coolant supply passage forming recess parts). This leads to higher functionality of the components and consequently to a reduction in the number of product items. Further, since the cooling plate including a coolant supply passage is constituted merely by connecting the first and second plates to each other, the manufacturing cost is reduced.

As described above, the cooling plate is constituted by connecting the first and second plates, thus enabling easy increase and decrease of the first and second coolant passages. Of course, by preparing third to n-th plates each having an identical or similar structure to that of the above-described first or second plate, it is also possible to add coolant passages in accordance with the shape of the back surface of the substrate section as appropriate.

A cooling system in accordance with Aspect 15 of the present disclosure may be configured, in Aspect 14 above, such that the first plate includes a first plate connection part that has a flat plate shape and that is continuous from the first coolant supply passage forming recess part, the second plate includes a second plate connection part that has a flat plate shape and that is continuous from the second coolant supply passage forming recess part, the first plate connection part and the second plate connection part are connected when the first plate and the second plate are joined, the substrate section includes a step part displaced toward a front surface side of the substrate section in a position opposite from the first plate connection part and the second plate connection part, and the coolant supply passage is formed by the step part and the first and second plate connection parts.

According to the above configuration, the first and second plate connection parts are formed into a flat plate shape, thus facilitating the operation for welding the two parts. Here, the term "flat plate shape" refers to a state in which the plate-shaped members constituting the first plate and the second plate are subjected to no processing such as making depressions and protrusions. Further, the flat plate shape includes a substantially flat plate shape.

A cooling system in accordance with Aspect 16 of the present disclosure may be configured, in Aspect 15 above, such that a plate-shaped member having a flat plate shape is substituted for the first plate connection part and the second plate connection part, and the plate-shaped member has one end connected to the first coolant supply passage forming recess part and the other end connected to the second coolant supply passage forming recess part.

According to the above configuration, the inexpensive plate-shaped members having a flat plate shape are substituted for the protrusion elements from the first and second plates, and thus the protrusion elements can be omitted. Therefore, the yield in manufacture of each plate is improved, which leads to a reduction in manufacturing cost.

A cooling assembly in accordance with Aspect 17 of the present disclosure may be configured, in any one of Aspects 1 to 16 above, to include: the cooling system; and the case including the substrate section of the cooling system and containing the cell body of the battery device.

According to the above configuration, the same effects as those of the cooling systems in accordance with Aspects 1 to 16 of the present disclosure are achieved.

A cooling assembly in accordance with Aspect 18 of the present disclosure may be configured to, in Aspect 17 above, further include a coolant supply section configured to independently supply a coolant in parallel to the first coolant passage and the second coolant passage and may be configured such that the case includes a first side plate part having a cross-section with a U-shape, the substrate section has an extended edge, the first side plate part is connected to the extended edge to form an overhang part, the coolant supply section includes a coolant supply passage, and an inlet port that is included in the coolant supply passage and that is for taking in the coolant is opened in the overhang part.

According to the above configuration, by forming the cross-section of at least one side plate part (first side plate part) of the case into a U-shape, shape retainability of the case is ensured. The extended part of the substrate section is connected to this first side plate part as an overhang part. Since the first side plate part with a U-shaped cross section has high shape retainability, that is, high mechanical rigidity, and thus is difficult to be deformed even by an impact from the outside. Therefore, piping from a coolant pump disposed outside the cooling assembly can be stably disposed in this overhang part. Then, by opening the inlet port of the coolant supply passage in this overhang part, the connection between the coolant supply passage and the coolant piping from the outside is stabilized.

A cooling assembly in accordance with Aspect 19 of the present disclosure may be configured, in Aspect 18 above, such that the case includes the first side plate part and a second side plate part having a cross-section with a U-shape, the first side plate part is formed to have a width greater than that of the second side plate part, and a coolant supply pipe for supplying the coolant to the inlet port is disposed in the first side plate part.

According to the above configuration, the first and second side plate parts both have a cross-section with a U-shape, thus providing mechanical strength to the case. By widening the first side plate part where the coolant supply pipe is disposed, while narrowing the second side plate part where such a component is not disposed, it is possible to increase the internal volume of the case as much as possible while ensuring the mechanical rigidity of the case.

A battery device in accordance with Aspect 20 of the present disclosure may be configured, in any one of Aspects 1 to 16 above, to include: the cooling system; the case including the substrate section of the cooling system; and a cell body contained in the case.

According to the above configuration, the same effects as those of the cooling systems in accordance with Aspects 1 to 16 of the present disclosure are achieved.

A battery device in accordance with Aspect 21 of the present disclosure is configured to include: a case containing a cell body; and a cooling section disposed on a back surface of a substrate section of the case, the cooling section including a first coolant passage and a second coolant passage separated from the first coolant passage, the back surface of the substrate section constituting a peripheral wall of the first coolant passage and a peripheral wall of the second coolant passage, another peripheral wall of the first coolant passage being formed by a first plate, another peripheral wall of the second coolant passage being formed by a second plate, the first plate and the second plate being attached to the back surface of the substrate section in an area where the cell body is disposed.

A battery device cooling method in accordance with Aspect 22 of the present disclosure is a method for cooling a battery device including: a substrate section of a case containing a cell body; a cooling plate attached to the substrate section; a first coolant passage; and a second coolant passage separated from the first coolant passage, the substrate section having a back surface constituting a peripheral wall of the first coolant passage and a peripheral wall of the second coolant passage, the cooling plate including a first plate forming another peripheral wall of the first coolant passage and a second plate forming another peripheral wall of the second coolant passage, the first plate and the second plate being attached to the back surface of the substrate section in an area where the cell body is disposed, the method including independently supplying a coolant in parallel to the first coolant passage and the second coolant passage.

A cooling plate in accordance with Aspect 23 of the present disclosure is a cooling plate that is attached to a substrate section of a case containing a cell body of a battery device and that constitutes a cooling system for the battery device together with the substrate section, the substrate section having a back surface constituting a peripheral wall of a first coolant passage and a peripheral wall of a second coolant passage separated from the first coolant passage, the cooling plate being configured to include: a first plate including a first coolant passage forming recess part forming another peripheral wall of the first coolant passage; a second plate including a second coolant passage forming recess part forming another peripheral wall of the second coolant passage; and a coolant supply section forming recess part configured to independently supply a coolant in parallel to the first coolant passage and the second coolant passage.

A cooling plate in accordance with Aspect 24 of the present disclosure may be configured, in Aspect 23 above, such that the coolant passage forming recess part, the first coolant passage forming recess part, and the second coolant passage forming recess part are disposed on the same plane parallel to the back surface of the substrate section.

A cooling plate in accordance with Aspect 25 of the present disclosure may be configured, in Aspect 24 above, such that the first plate and the second plate are separate members, the first plate further includes a first coolant supply passage forming recess part, the second plate further includes a second coolant supply passage forming recess part, and the first coolant supply passage forming recess part and the second coolant supply passage forming recess part that are connected by joining the first plate and the second plate constitute a part of the coolant supply passage forming recess part.

A cooling system in accordance with Aspect 26 of the present disclosure may be configured, in Aspect 2 above, to further include a coolant discharge section, the coolant discharge section being formed on a front surface side of the substrate section.

According to the above configuration, since the coolant discharge section is provided on the opposite surface (front surface) in the substrate section where the coolant supply section and the coolant passages are formed, the degree of freedom in designing the coolant discharge section, the coolant supply section, and the coolant passages is ensured.

A cooling system in accordance with Aspect 27 of the present disclosure may be configured, in Aspect 26 above, such that in the substrate section, the coolant discharge section is formed on a front surface opposite to the back surface on which the coolant supply section is formed.

According to the above configuration, the coolant supply section and the coolant discharge section can be gathered in an area on one end side of the substrate section. Therefore, a wider area where the coolant passages are disposed can be ensured in the substrate section.

For the purpose of describing the present disclosure, embodiments having specific configurations are described above with reference to the accompanying drawings; however, the scope of the present disclosure should not be construed as being limited to the embodiments, and it goes without saying that appropriate modifications can be made within the scope of the matters described in the claims and the specification.

### Reference Signs List

2, 202, 402, 502, 702, 802, 1002 Substrate section
A1, A11, A31, A41 First coolant passage
A2, A12, A32, A42 Second coolant passage
411a, 511a, 611a, 711a, 811a, 1011a First plate (metal plate)
411b, 511b, 611b, 711b, 811b, 1011b Second plate (metal plate)
C1, C2, C11, C12, C41 Coolant supply passage
D1, D2, D3, D4, D11, D12, D41 Coolant discharge passage
S Stacked cell

## Claims

1. A cooling system for a battery device, the cooling system comprising:
a substrate section of a case containing a cell body of the battery device;
a cooling plate attached to the substrate section;
a first coolant passage; and
a second coolant passage separated from the first coolant passage,
the substrate section having a back surface constituting a peripheral wall of the first coolant passage and a peripheral wall of the second coolant passage,
the cooling plate including a first plate forming another peripheral wall of the first coolant passage and a second plate forming another peripheral wall of the second coolant passage,
the first plate and the second plate being attached to the back surface of the substrate section in an area where the cell body is disposed.

2. The cooling system according to claim 1, further comprising a coolant supply section configured to independently supply a coolant in parallel to the first coolant passage and the second coolant passage.

3. The cooling system according to claim 2, wherein
the coolant supply section includes a coolant supply passage, and
the coolant supply passage includes an inlet port for taking in the coolant, a first outlet port for sending out the coolant to the first coolant passage, and a second outlet port for sending out the coolant to the second coolant passage.

4. The cooling system according to claim 3, wherein the coolant supply passage has a smaller passage cross-sectional area at the first outlet port and the second outlet port.

5. The cooling system according to claim 3, wherein the coolant supply passage has a peripheral wall separated from the substrate section of the case.

6. The cooling system according to claim 5, wherein the peripheral wall of the first coolant passage and the peripheral wall of the second coolant passage are interposed between the peripheral wall of the coolant supply passage and the substrate section.

7. The cooling system according to claim 5, wherein
the coolant supply passage is separated from the first and second coolant passages, and
the peripheral wall of the coolant supply passage is formed by the substrate section free of a thermal influence from the cell body.

8. The cooling system according to claim 6, wherein
the case contains a first cell body and a second cell body in parallel,
the first coolant passage is disposed opposite from the first cell body, and
the second coolant passage is disposed opposite from the second cell body.

9. The cooling system according to claim 8, wherein the coolant supply passage is disposed so as to overlap the first coolant passage and the second coolant passage and be perpendicular to a direction in which the first coolant passage and the second coolant passage are arranged.

10. The cooling system according to claim 9, wherein in plan view, the coolant supply passage is disposed across an edge of the first coolant passage and an edge of the second coolant passage.

11. The cooling system according to claim 9, wherein in plan view, the coolant supply passage is disposed so as to divide the first coolant passage and the second coolant passage, preferably each into two portions.

12. The cooling system according to claim 3, wherein the coolant supply passage, the first coolant passage, and the second coolant passage are disposed on the same plane parallel to the back surface of the substrate section.

13. The cooling system according to claim 12, wherein the coolant supply passage is disposed across a periphery of the first coolant passage and a periphery of the second coolant passage so as to surround the first coolant passage and the second coolant passage.

14. The cooling system according to claim 12, wherein
the first plate includes a first coolant supply passage forming recess part,
the second plate includes a second coolant supply passage forming recess part,
the first and second coolant supply passage forming recess parts are connected by joining the first and second plates, and
the coolant supply passage is formed by the first and second coolant supply passage forming recess parts joined and the back surface of the substrate section.

15. The cooling system according to claim 14, wherein
the first plate includes a first plate connection part that has a flat plate shape and that is continuous from the first coolant supply passage forming recess part,
the second plate includes a second plate connection part that has a flat plate shape and that is continuous from the second coolant supply passage forming recess part,
the first plate connection part and the second plate connection part are connected when the first plate and the second plate are joined,
the substrate section includes a step part displaced toward a front surface side of the substrate section in a position opposite from the first plate connection part and the second plate connection part, and
the coolant supply passage is formed by the step part and the first and second plate connection parts.

16. The cooling system according to claim 15, wherein
a plate-shaped member having a flat plate shape is substituted for the first plate connection part and the second plate connection part, and
the plate-shaped member has one end connected to the first coolant supply passage forming recess part and the other end connected to the second coolant supply passage forming recess part.

17. The cooling assembly comprising:
the cooling system according to any one of claims 1 to 16; and
the case including the substrate section of the cooling system and containing the cell body of the battery device.

18. The cooling assembly according to claim 17, further comprising a coolant supply section configured to independently supply a coolant in parallel to the first coolant passage and the second coolant passage,
the case including a first side plate part having a cross-section with a U-shape,
the substrate section having an extended edge,
the first side plate part being connected to the extended edge to form an overhang part,
the coolant supply section including a coolant supply passage, and
an inlet port that is included in the coolant supply passage and that is for taking in the coolant being opened in the overhang part.

19. The cooling assembly according to claim 18, wherein
the case includes the first side plate part and a second side plate part having a cross-section with a U-shape,
the first side plate part is formed to have a width greater than that of the second side plate part, and
a coolant supply pipe for supplying the coolant to the inlet port is disposed in the first side plate part.

20. A battery device comprising:
the cooling system according to any one of claims 1 to 16;
the case including the substrate section of the cooling system; and
the cell body contained in the case.

21. A battery device comprising:
a case containing a cell body; and
a cooling section disposed on a back surface of a substrate section of the case,
the cooling section including a first coolant passage and a second coolant passage separated from the first coolant passage,
the back surface of the substrate section constituting a peripheral wall of the first coolant passage and a peripheral wall of the second coolant passage,
another peripheral wall of the first coolant passage being formed by a first plate,
another peripheral wall of the second coolant passage being formed by a second plate,
the first plate and the second plate being attached to the back surface of the substrate section in an area where the cell body is disposed.

22. A method for cooling a battery device including:
a substrate section of a case containing a cell body;
a cooling plate attached to the substrate section;
a first coolant passage; and
a second coolant passage separated from the first coolant passage,
the substrate section having a back surface constituting a peripheral wall of the first coolant passage and a peripheral wall of the second coolant passage,
the cooling plate including a first plate forming another peripheral wall of the first coolant passage and a second plate forming another peripheral wall of the second coolant passage,
the first plate and the second plate being attached to the back surface of the substrate section in an area where the cell body is disposed,
the method comprising independently supplying a coolant in parallel to the first coolant passage and the second coolant passage.

23. A cooling plate that is attached to a substrate section of a case containing a cell body of a battery device and that constitutes a cooling system for the battery device together with the substrate section,
the substrate section having a back surface constituting a peripheral wall of a first coolant passage and a peripheral wall of a second coolant passage separated from the first coolant passage,
the cooling plate comprising:
a first plate including a first coolant passage forming recess part forming another peripheral wall of the first coolant passage;
a second plate including a second coolant passage forming recess part forming another peripheral wall of the second coolant passage; and
a coolant supply section forming recess part configured to independently supply a coolant in parallel to the first coolant passage and the second coolant passage.

24. The cooling plate according to claim 23, wherein the coolant passage forming recess part, the first coolant passage forming recess part, and the second coolant passage forming recess part are disposed on the same plane parallel to the back surface of the substrate section.

25. The cooling plate according to claim 24, wherein
the first plate and the second plate are separate members,
the first plate further includes a first coolant supply passage forming recess part,
the second plate further includes a second coolant supply passage forming recess part, and
the first coolant supply passage forming recess part and the second coolant supply passage forming recess part that are connected by joining the first plate and the second plate constitute a part of the coolant supply passage forming recess part.

26. The cooling system according to claim 2, further comprising a coolant discharge section,
the coolant discharge section being formed on a front surface side of the substrate section.

27. The cooling system according to claim 26, wherein in the substrate section, the coolant discharge section is formed on a front surface opposite to the back surface on which the coolant supply section is formed.
